(19) Europäisches Patentamt / European Patent Office / Office européen des brevets

(11) **EP 4 398 349 A1**

(12) **EUROPEAN PATENT APPLICATION**
published in accordance with Art. 153(4) EPC

(43) Date of publication:
**10.07.2024 Bulletin 2024/28**

(21) Application number: **22864700.4**

(22) Date of filing: **01.09.2022**

(51) International Patent Classification (IPC):
*H01M 4/66* (2006.01)    *C23C 28/02* (2006.01)
*C25D 5/12* (2006.01)    *C25D 5/26* (2006.01)
*C25D 5/50* (2006.01)    *C25D 7/00* (2006.01)
*C25D 7/06* (2006.01)    *H01M 50/119* (2021.01)
*H01M 50/534* (2021.01)

(52) Cooperative Patent Classification (CPC):
**C23C 28/02; C25D 5/12; C25D 5/36; C25D 5/50;
C25D 7/00; C25D 7/06; H01M 4/66; H01M 50/119;
H01M 50/534;** Y02E 60/10

(86) International application number:
**PCT/JP2022/033006**

(87) International publication number:
**WO 2023/033118 (09.03.2023 Gazette 2023/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.09.2021   JP 2021142714
03.06.2022   JP 2022091139**

(71) Applicant: **Toyo Kohan Co., Ltd.
Tokyo 141-8260 (JP)**

(72) Inventors:
• **KAWAMURA, Michio**
  **Kudamatsu-shi, Yamaguchi 744-8611 (JP)**
• **UEHARA, Kaori**
  **Kudamatsu-shi, Yamaguchi 744-8611 (JP)**
• **TSUTSUMI, Etsuro**
  **Kudamatsu-shi, Yamaguchi 744-8611 (JP)**
• **HORIE, Shinichirou**
  **Kudamatsu-shi, Yamaguchi 744-8611 (JP)**
• **MATSUSHIGE, Daisuke**
  **Kudamatsu-shi, Yamaguchi 744-8611 (JP)**

(74) Representative: **Kraus & Lederer PartGmbB
Thomas-Wimmer-Ring 15
80539 München (DE)**

(54) **SURFACE-TREATED METAL SHEET FOR BATTERY**

(57)    Provided is a surface-treated metal sheet for batteries, the surface-treated metal sheet comprising a base material which is a metal sheet based on iron or nickel, and a nickel-tin alloy layer on at least one side of the metal sheet.

EP 4 398 349 A1

**Description**

TECHNICAL FIELD

The present invention relates to a surface-treated metal sheet for batteries that can suppress gas generation and has an excellent electrolyte-resistant property.

BACKGROUND ART

There are practically used and well-known types of secondary batteries using an aqueous alkaline solution as an electrolyte solution, so-called alkaline batteries, including nickel-cadmium batteries, nickel-hydrogen batteries, and the like. Further, in alkaline secondary batteries, air batteries as well as nickel-zinc batteries, which use nickel hydroxide or the like for a positive electrode and zinc or the like for a negative electrode active material and use an aqueous alkaline solution as an electrolyte solution, have been extensively investigated as next-generation batteries.

Advantages of nickel-zinc batteries include the following: they have a high electromotive force for aqueous batteries and a high energy density, zinc is inexpensive, they are rare metal-less, both nickel and zinc are recyclable metals, they are superior in safety to lithium-ion batteries because they use an aqueous electrolyte solution, and the like.

On the other hand, one of the difficulties for practical applications of zinc-air batteries and nickel-zinc batteries as secondary batteries is a hydrogen gas-generation problem during charge/discharge (including self discharging). When hydrogen gas generation occurs and the amount of the produced gas exceeds a certain level, a decrease in battery performance and an increase in the internal pressure can occur, which can cause battery leakage. These problems can be especially remarkable in batteries in which zinc is involved in the battery reaction.

It is already known that the above-mentioned hydrogen gas-generation problem can be fixed by using materials having a high hydrogen overvoltage for a negative electrode current collector. For example, in Patent Document 1, it is intended that the hydrogen gas-generation problem as mentioned above should be fixed by using an alloy of copper and tin as a material for a current collector of a negative electrode to increase the hydrogen overvoltage.

RELATED ART DOCUMENT

PATENT DOCUMENT

Patent Document 1: JP H2-75160 A

SUMMARY OF THE INVENTION

PROBLEMS TO BE SOLVED BY INVENTION

However, the technique described in Patent Document 1 offers insufficient corrosion resistance (electrolyte-resistant property) when it is applied to practical alkaline secondary batteries. That is, to achieve sufficient battery performance as alkaline secondary batteries, it is preferred that potassium hydroxide concentration is equal to or more than 20% by weight, and 25 to 40% by weight is desired to achieve much higher performance.

On the other hand, an alloy of copper and tin as described in the above-mentioned Patent Document 1 can improve the corrosion resistance as compared to copper alone. However, the alloy is also dissolved in the electrolyte solution under the conditions as described above in which the concentration is high. Moreover, the dissolution is further accelerated during discharge reaction. Thus, the alloy is unsuited for practical application.

On the other hand, when nickel, which is generally thought to have excellent alkali-resistant properties, is used, the dissolution in an alkaline electrolyte solution can be prevented. However, the hydrogen overvoltage of nickel is low, which leads to a problem that hydrogen gas is easily generated. In particular, when zinc is involved in the battery reaction, the potential difference between hydrogen and zinc in an alkaline electrolyte solution is large, and thus hydrogen gas can be remarkably easily generated.

In view of the above-described problems, the present inventors have made intensive investigations to develop a surface-treated metal sheet for batteries that can suppress gas generation in alkaline secondary batteries during charge/discharge and can prevent dissolution in an electrolyte solution, and that can be used as a material for a current collector of a negative electrode, a material for a battery tab/lead, or a battery container (a battery exterior material). As a result, the present inventors have found that a surface-treated metal sheet for batteries having a specific constitution can simultaneously address the above-described problems, and consequently have made the present invention.

MEANS FOR SOLVING THE PROBLEMS

The present inventors have made intensive investigations to accomplish the above-described purpose. As a result, the present inventors have found that a surface-treated metal sheet for batteries comprising a nickel-tin alloy layer on at least one side of a metal sheet based on iron or nickel can achieve the above-described object, and have made the present invention.

That is, the present invention relates to the following items.

[1] A surface-treated metal sheet for batteries, the surface-treated metal sheet comprising a base material which is a metal sheet based on iron or nickel, and a nickel-tin alloy layer on at least one side of the metal sheet.

[2] The surface-treated metal sheet for batteries according to [1], wherein the nickel-tin alloy layer has a thickness of 0.05 to 5.00 um as measured by radio frequency glow discharge optical emission spectroscopy (GDS).

[3] The surface-treated metal sheet for batteries according to [1] or [2], comprising a nickel layer as an underlying layer of the nickel-tin alloy layer.

[4] The surface-treated metal sheet for batteries according to any one of [1] to [3], wherein the deposited amount of nickel on the surface where the nickel-tin alloy layer is formed is 2.1 to 65.0 $g/m^2$.

[5] The surface-treated metal sheet for batteries according to any one of [1] to [4], wherein the deposited amount of tin on the surface where the nickel-tin alloy layer is formed is 0.05 to 15.0 $g/m^2$.

[6] The surface-treated metal sheet for batteries according to any one of [1] to [5], wherein the nickel-tin alloy layer contains $Ni_3Sn_4$ as an alloy phase.

[7] The surface-treated metal sheet for batteries according to any one of [1] to [6], wherein the nickel-tin alloy layer contains, as an alloy phase, a nickel-tin alloy that gives a diffraction peak in at least one of the region of diffraction angle $2\theta = 40$ to $42°$ or the region of diffraction angle $2\theta = 46$ to $48°$ as measured by X-ray diffraction measurement using $CuK\alpha$ as an X-ray source.

[8] The surface-treated metal sheet for batteries according to [7], wherein the nickel-tin alloy layer contains, as alloy phases, nickel-tin alloys that give diffraction peaks in the region of diffraction angle $2\theta = 40$ to $42°$ and the region of diffraction angle $2\theta = 46$ to $48°$.

[9] The surface-treated metal sheet for batteries according to any one of [1] to [8], wherein the nickel-tin alloy layer contains, as an alloy phase, $Ni_3Sn_2$.

[10] The surface-treated metal sheet for batteries according to any one of [1] to [9], wherein the metal sheet is formed of low carbon steel or ultra-low carbon steel.

[11] The surface-treated metal sheet for batteries according to any one of [1] to [10], wherein the metal sheet is an electrolytic foil formed of pure iron, an electrolytic foil formed of pure nickel, or an electrolytic foil formed of a binary alloy of iron and nickel.

EFFECT OF THE INVENTION

According to the present invention, a surface-treated metal sheet for batteries that can suppress gas generation and has an excellent electrolyte-resistant property can be provided.

BRIED DESCRIPTION OF DRAWINGS

Fig. 1 is a cross-sectional view of a surface-treated metal sheet for batteries according to an embodiment of the present invention.

Fig. 2 is a cross-sectional view of a surface-treated metal sheet for batteries according to another embodiment of the present invention.

Fig. 3A is X-ray diffraction (XRD) charts each showing a diffraction peak of $Ni-Sn_{40-42}$ or $Ni-Sn_{46-48}$.

Fig. 3B is an X-ray diffraction (XRD) chart showing diffraction peaks of $Ni_3Sn_4$.

Fig. 3C is an X-ray diffraction (XRD) chart showing a diffraction peak of $Ni_3Sn_2$.

Fig. 3D is an X-ray diffraction (XRD) chart showing diffraction peaks of $Ni-Sn_{40-42}$ before and after an anode reaction test.

Fig. 3E is an X-ray diffraction (XRD) chart showing diffraction peaks of $Ni-Sn_{46-48}$ before and after an anode reaction test.

Fig. 4 is diagrams for describing the method for measuring the thickness by radio frequency glow discharge optical emission spectroscopy (GDS).

Fig. 5(A) is a graph produced by GDS measurement of the surface-treated metal sheet for batteries of Example 1, and Fig. 5(B) and Fig. 5(C) are graphs produced by GDS measurement of the surface-treated metal sheet for batteries of Example 5.

DESCRIPTION OF EMBODIMENTS

The surface-treated metal sheet for batteries according to the present invention is a surface-treated metal sheet used for battery application, and is used for, for example, applications as current collectors for a positive electrode or a negative electrode, applications as battery containers for accommodating electric power-generating elements of a battery, or the like. Examples of the batteries include, but are not limited to, aqueous batteries using an alkaline electrolyte solution, such as nickel-cadmium batteries, nickel-hydrogen batteries, zinc-air batteries, and nickel-zinc batteries, non-aqueous batteries such as lithium-ion batteries, and the like. The surface-treated metal sheet for batteries according to the present invention is preferably used in aqueous batteries, among which the surface-treated metal sheet for batteries is particularly preferably used in applications as current collectors and in applications as battery containers for constituting aqueous batteries in which zinc is involved in the battery reaction (e.g., nickel-zinc batteries).

In addition, the present invention is applicable to both primary batteries and secondary batteries as long as they are aqueous batteries.

Hereinafter, one embodiment of the present invention will be described with reference to the accompanying drawings.

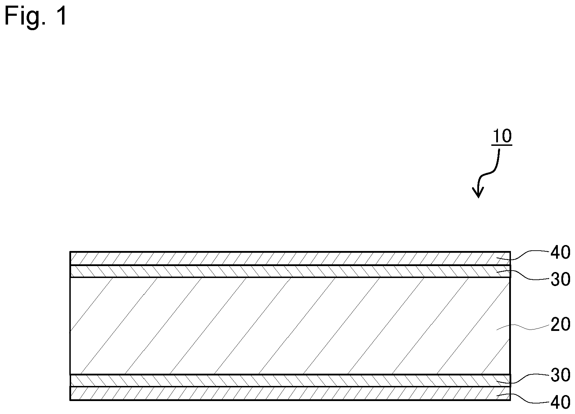

Fig. 1 is a cross-sectional view of a surface-treated metal sheet for batteries 10. As shown in Fig. 1, the surface-treated metal sheet for batteries 10 according to the present embodiment comprises nickel-tin alloy layers 40 on both sides of a base material 20. Although Fig. 1 shows an exemplary constitution in which a nickel-tin alloy layer 40 is formed such that a nickel layer 30 formed on the base material 20 is interposed between the nickel-tin alloy layer 40 and the base material 20, the present invention is not particularly limited to this construction, and, for example, a constitution having a nickel-tin alloy layer 40 formed directly on the base material 20 is also possible.

Further, Fig. 1 shows an exemplary construction having nickel-tin alloy layers 40 formed on both sides of a base material 20. However, in the present embodiment, it is sufficient that the nickel-tin alloy layer 40 is formed on at least one side of the base material 20, and the construction is not particularly limited to those having nickel-tin alloy layers 40 formed on both sides of the base material 20. In addition, in the present embodiment, it is sufficient that the nickel-tin alloy layer 40 is formed on the side where suppression of gas generation is required. For example, when the surface-treated metal sheet for batteries 10 according to the present embodiment is used in applications as current collectors for a positive electrode or a negative electrode (e.g., when used in applications as current collectors for a negative electrode of nickel-zinc batteries) or is used as a material for leads or a material for tubs, a construction having nickel-tin alloy layers 40 formed on both sides of the base material 20 is possible. In addition, when the surface-treated metal sheet for batteries 10 according to the present embodiment is used in applications as battery containers such as a container or an electrode can, a construction having a nickel-tin alloy layer 40 formed on the side of the base material 20, the side being for constituting the inside surface of a battery, is possible. In particular, when a battery has a structure in which the inside surface of the battery is subjected to a negative electrode potential, a construction having a nickel-tin alloy layer 40 formed on the inside surface of the battery is desirable. On the other hand, the side for constituting the outside surface of a battery can be, but is not particularly limited to, a surface with no surface treatment, or can have other surface treatment layers such as a nickel layer 30 or a nickel-tin alloy layer 40 formed thereon.

<Base Material 20>

The base material 20 is not particularly limited as long as it is a metal sheet based on iron or nickel. For example, a steel sheet of, for example, low carbon steel (carbon content: 0.01 to 0.15% by weight), ultra-low carbon steel with a carbon content of equal to or less than 0.003% by weight, or non-ageing ultra-low carbon steel formed by adding Ti, Nb, or the like to ultra-low carbon steel, or a nickel sheet can be used as a base material 20. Among these, low carbon steel and ultra-low carbon steel can preferably be used. Furthermore, examples of the base material 20 include an electrolytic foil formed of pure iron (an electrolytic foil with an iron content of equal to or more than 99.9% by weight), an electrolytic foil formed of pure nickel (an electrolytic foil with a nickel content of equal to or more than 99.9% by weight), or an electrolytic foil formed of a binary alloy of iron and nickel. On the other hand, when the surface-treated metal sheet for batteries 10 according to the present embodiment is used for applications as current collectors of a positive electrode or a negative electrode, the base material 20 can be a perforated sheet or a perforated foil having perforations.

The thickness of the base material 20 is not particularly limited, but is, for example, preferably 0.005 to 2.0 mm, more preferably 0.01 to 0.8 mm, even more preferably 0.025 to 0.8 mm, particularly preferably 0.025 to 0.3 mm, when used for applications as current collectors. On the other hand, when the base material 20 is used for applications as battery containers, the thickness is preferably 0.1 to 2.0 mm, more preferably 0.15 to 0.8 mm, even more preferably 0.15 to 0.5 mm.

<Nickel-tin alloy layer 40>

The surface-treated metal sheet for batteries 10 according to the present embodiment comprises a nickel-tin alloy layer 40 on the base material 20. Although Fig. 1 shows an exemplary construction in which a nickel-tin alloy layer 40 is formed such that a nickel layer 30 formed on the base material 20 is interposed between the nickel-tin alloy layer 40 and the base material 20, the present invention is not particularly limited to this construction, and, for example, a constitution with no nickel layer 30 is also possible. With respect to the nickel-tin alloy layer 40 described above, whether a nickel-tin alloy layer is present or not can be determined by performing radio frequency glow discharge optical emission spectroscopy (GDS) and X-ray diffraction (XRD) measurement as described below.

The nickel-tin alloy layer 40 is not particularly limited as long as it is formed of an alloy of nickel and tin, but, from the viewpoint of properly achieving the effects of the present embodiment, it is desirably formed of a binary alloy of nickel and tin, and desirably contains substantially no other elements such as iron. For example, the surface-treated metal sheet for batteries 10 according to the present embodiment can have an iron-nickel-tin ternary alloy layer, and desirably has at least a layer formed of a binary alloy of nickel and tin.

The nickel-tin alloy layer 40 is desirably formed of a binary alloy of nickel and tin, the crystal structure or the like of which is not particularly limited, but preferably contains, as an alloy phase, $Ni_3Sn_4$ or $Ni_3Sn_2$, or a nickel-tin alloy that gives a diffraction peak in the region of diffraction angle $2\theta = 40$ to $42°$ (hereinafter, this nickel-tin alloy is called "Ni-$Sn_{40-48}$") or a nickel-tin alloy that gives a diffraction peak in the region of diffraction angle $2\theta = 46$ to $48°$ (hereinafter, this nickel-tin alloy is called "Ni-$Sn_{46-48}$") as measured by X-ray diffraction measurement using $CuK\alpha$ as an X-ray source.

To confirm that the above-described Ni-$Sn_{40-42}$ and Ni-$Sn_{46-48}$ are binary alloys of nickel and tin, methods for confirmation such as radio frequency glow discharge optical emission spectroscopy (GDS) or scanning Auger electron spectroscopy (AES) can be used as described below. Specifically, radio frequency glow discharge optical emission spectroscopy (GDS) is performed on the nickel-tin alloy layer 40 formed on the base material 20 to confirm Ni intensity, Sn intensity, and Fe intensity. Next, X-ray diffraction (XRD) measurement is performed to obtain a diffraction peak in the region of diffraction angle $2\theta = 40$ to $42°$ or a diffraction peak in the region of diffraction angle $2\theta = 46$ to $48°$ as described above. From these results, it can be determined that a binary alloy of nickel and tin is contained.

It should be noted that the diffraction peak in the region of diffraction angle $2\theta = 40$ to $42°$ and the diffraction peak in the region of diffraction angle $2\theta = 46$ to $48°$ have been confirmed to be different from the diffraction peaks of pure nickel, pure tin, and pure iron.

$Ni_3Sn_4$ as an alloy phase gives, as measured by X-ray diffraction measurement using $CuK\alpha$ as an X-ray source, a diffraction peak of (310) plane in the region of diffraction angle $2\theta = 31$ to $32°$ (according to ICDD-PDF card 03-065-4553). In addition, $Ni_3Sn_4$ as an alloy phase can be confirmed by a diffraction peak of (-311) plane in the region of diffraction angle $2\theta = 32.5$ to $33.5°$ and a diffraction peak of (002) plane in the region of diffraction angle $2\theta = 35$ to $36°$ (according to ICDD-PDF card 03-065-4553) .

$Ni_3Sn_2$ as an alloy phase gives, as measured by X-ray diffraction measurement using $CuK\alpha$ as an X-ray source, a diffraction peak of (201) plane in the region of diffraction angle $2\theta = 54$ to $55°$ (according to ICDD-PDF card 01-072-2561) . In addition, $Ni_3Sn_2$ as an alloy phase can be confirmed by a diffraction peak of (002) plane in the region of diffraction angle $2\theta = 34$ to $35°$ (according to ICDD-PDF card 01-072-2561).

Further, Ni-$Sn_{40-42}$ as an alloy phase gives, as measured by X-ray diffraction measurement using $CuK\alpha$ as an X-ray source, a diffraction peak in the region of diffraction angle $2\theta = 40$ to $42°$, and Ni-$Sn_{46-48}$ as an alloy phase gives a diffraction peak in the region of diffraction angle $2\theta = 46$ to $48°$.

The nickel-tin alloy layer 40 preferably contains any of $Ni_3Sn_4$, $Ni_3Sn_2$, Ni-$Sn_{40-42}$, and Ni-$Sn_{46-48}$ as an alloy phase.

More specifically, from the viewpoint of further improving the electrolyte-resistant property, it is preferred that at least one of $Ni_3Sn_4$ and $Ni_3Sn_2$ is contained, and from the viewpoint of further improving the effect of suppressing gas generation, it is preferred that at least one of $Ni_3Sn_4$, Ni-$Sn_{40-42}$, and Ni-$Sn_{46-48}$ is contained as an alloy phase. In particular, when both Ni-$Sn_{40-42}$ and Ni-$Sn_{46-48}$ are contained as alloy phases, the effect of suppressing gas generation is markedly improved, and thus it is particularly preferred. In addition, from the viewpoint of still further improving the effect of suppressing gas generation and the electrolyte-resistant property, it is particularly preferred that $Ni_3Sn_4$ is contained as an alloy phase. Further, the nickel-tin alloy layer 40 can contain two or more of $Ni_3Sn_4$, $Ni_3Sn_2$, Ni-$Sn_{40-42}$, and Ni-$Sn_{46-48}$ as alloy phases.

On the other hand, it is preferred that the nickel-tin alloy layer 40 contains no alloy phase (e.g., $Ni_3Sn$) except for the alloy phases such as $Ni_3Sn_4$, $Ni_3Sn_2$, Ni-$Sn_{40-42}$, and Ni-$Sn_{46-48}$. That is, it is preferred that no diffraction peak is obtained in the region of diffraction angle $2\theta = 33$ to $34°$ as measured by X-ray diffraction measurement using $CuK\alpha$ as an X-ray source (more specifically, no diffraction peaks having an integrated intensity that is 1% or more of the integrated intensity of the peak that has the highest integrated intensity among the peaks corresponding to $Ni_3Sn_4$, $Ni_3Sn_2$, Ni-$Sn_{40-42}$, and Ni-$Sn_{46-48}$ is obtained) .

In the present embodiment, the reasons why having the above-described constitution is desirable are as follows.

That is, as described above, there is a hydrogen-gas generation problem as one of the difficulties for practical applications of alkaline secondary batteries. Hydrogen gas is generated after satisfaction of a reaction condition for generating hydrogen gas under conditions that allow a chemical reaction (self-discharge) other than battery reactions due to the formation of a local cell between different metals in the battery. For example, in nickel-zinc batteries, zinc deposits as zinc or zinc oxide during charging, and the zinc dissolves during discharging. Since zinc is one of the metals that have lower potentials among metals used in aqueous batteries, large amounts of discharge occur when it forms a local cell with a different metal used in the battery. Thus, the condition for generating hydrogen gas can be easily satisfied.

Generation of large amounts of hydrogen gas leads to problems of a decrease in battery performance and battery-leakage. Specifically, when hydrogen gas generation due to self-discharge occurs, electrons that should contribute to battery reactions are consumed for generating the hydrogen gas, which leads to a decrease in battery performance. Thus, as the amount of the generated hydrogen gas increases, the battery performance further decreases. In addition, there is a possibility of battery leakage due to an increase in the internal pressure, which leads to low safety. It should be noted that self-discharge as used herein includes both side reactions during charge/discharge (chemical reactions including hydrogen gas-generation process) and chemical reactions except for those during charge/discharge, that is, chemical reactions that occur under natural resting conditions.

In order to avoid these decreases in battery performance and battery-leakage problem, the amount of hydrogen gas generation should be suppressed as much as possible. In particular, since zinc or the like in the electrolyte solution deposits on the surface of the current collector and the deposit comes into contact with the materials of the current collector directly, the current collector is a member where hydrogen gas can be more easily generated and self-discharge can easily occur.

As a method for reducing such gas generation, it is known to use materials having a high hydrogen overvoltage.

In the present embodiment, tin in the nickel-tin alloy layer 40 can be considered as a material that has a high hydrogen overvoltage. However, tin has a low electrolyte-resistant property. On the other hand, nickel in the nickel-tin alloy layer 40 has a low hydrogen overvoltage, but has an excellent electrolyte-resistant property.

Thus, the present inventors have changed the plating conditions, the thermal treatment conditions, or the like for forming the nickel-tin alloy layer 40 to obtain alloy layers having different contents of nickel and tin, different alloy structures, or the like. Thus, the present inventors have made intensive investigations and repeated experiments, and as a result, the present inventors have found that when a nickel-tin alloy layer 40 is formed, the above-described problems regarding electrolyte-resistant property and hydrogen gas generation can be simultaneously addressed. Furthermore, the present inventors have also found that it is preferred that the nickel-tin alloy layer 40 contain at least one of $Ni_3Sn_4$, $Ni_3Sn_2$, $Ni\text{-}Sn_{40\text{-}42}$, and $Ni\text{-}Sn_{46\text{-}48}$ as an alloy phase, and that, among the above-described alloy phases, when the alloy phase of $Ni_3Sn_4$ is contained, a superior electrolyte-resistant property and a superior gas generation-suppressing effect are achieved.

The thickness of the nickel-tin alloy layer 40 is not particularly limited, but is preferably 0.05 to 5.00 um, more preferably 0.05 to 3.00 $\mu$m, even more preferably 0.10 to 2.50 $\mu$m. When the thickness of the nickel-tin alloy layer 40 is within the above-described ranges, the effect of suppressing gas generation and the electrolyte-resistant property can be further improved.

The thickness of the nickel-tin alloy layer 40 can be determined by radio frequency glow discharge optical emission spectroscopy (GDS) using a radio frequency glow discharge optical emission spectrometer (GDS measuring instrument). The radio frequency glow discharge optical emission spectrometer mentioned above is an analyzer for performing elemental analysis in the depth direction on a specimen subjected to various surface treatments such as plating and a thermal treatment, and the analysis is a destructive analysis by sputtering.

The procedure for the analysis using a radio frequency glow discharge optical emission spectrometer is as follows: First, two standard samples are prepared, that is, a standard sample in which a pure Ni plating layer with a known thickness is formed on an iron-based metal sheet, and a standard sample in which a pure Sn plating layer with a known thickness is formed on a stainless sheet having strike Ni plating. Next, the above-described two standard samples are each measured using a radio frequency glow discharge optical emission spectrometer to obtain Ni intensity data, Sn intensity data, and Fe intensity data in regions at respective depths. Then, the relation between sputter depth and sputtering time (etch rate (unit: $\mu$m/sec)) is calculated from the Ni intensity data, the Sn intensity data, and the Fe intensity data obtained above. The resulting two etch rates are respectively denoted as etch rate $R_{Ni}$ of the pure Ni plating layer and etch rate $R_{Sn}$ of the pure Sn plating layer. In addition, since the pure Ni plating layer and the nickel-tin alloy layer have similar hardness, and there is a correlation between etch rate and hardness as measured using a radio frequency glow discharge optical emission spectrometer, the etch rate $R_{Ni}$ of the pure Ni plating layer is considered as etch rate $R_{Ni\text{-}Sn}$ of a nickel-tin alloy layer.

Next, the Ni intensity data, the Sn intensity data, and the Fe intensity data obtained by measuring the above-described two standard samples are corrected by intensity data correction such that the maximum values of the obtained pieces of intensity data become comparable. The intensity data correction is performed by obtaining correction factors which render the maximum values of the pieces of intensity data comparable, and correcting the Ni intensity data, the Sn intensity data, and the Fe intensity data using the correction factors obtained above. For example, in the standard sample in which a pure Ni plating layer is formed on an iron-based metal sheet, the correction factors can be defined such that the maximum values of the Ni intensity data and the Fe intensity data are corrected to 10, and in the standard sample in which a pure Sn plating layer is formed on a stainless sheet having strike Ni plating, the correction factor can be defined such that the maximum value of the Sn intensity data is corrected to 10.

In this analytical procedure, the correction factors are defined such that each of the maximum values is corrected to 10. Then, Ni is determined to be detected in the region at a depth where Ni intensity is 1 or more, Sn is determined to be detected in the region at a depth where Sn intensity is 0.2 or more, and Fe is determined to be detected in the region at a depth where Fe intensity is 1 or more. Thus, in this analytical procedure, a nickel layer is determined to be formed in the region at a depth where the intensities represented by the measured values are an Ni intensity of 1 or more, an Fe intensity of less than 1, and an Sn intensity of less than 0.2. Similarly, a tin layer is determined to be formed in the region at a depth where the intensities represented by the measured values are an Sn intensity of 0.2 or more, an Ni intensity of less than 1, and an Fe intensity of less than 1. The region at a depth where the intensities represented by the measured values are an Fe intensity of 1 or more, an Ni intensity of less than 1, and an Sn intensity of less than 0.2 is determined to be a region formed of Fe (e.g., base material 20). Furthermore, the region at a depth where the intensities represented by the measured values are an Ni intensity of 1 or more, an Sn intensity of 0.2 or more, and an Fe intensity of less than 1 is determined to be a region where the nickel-tin alloy layer 40 is formed, and the region at a depth where the intensities represented by the measured values are an Ni intensity of 1 or more, an Fe intensity of 1 or more, and an Sn intensity of less than 0.2 is determined to be a region where the iron-nickel alloy layer is formed.

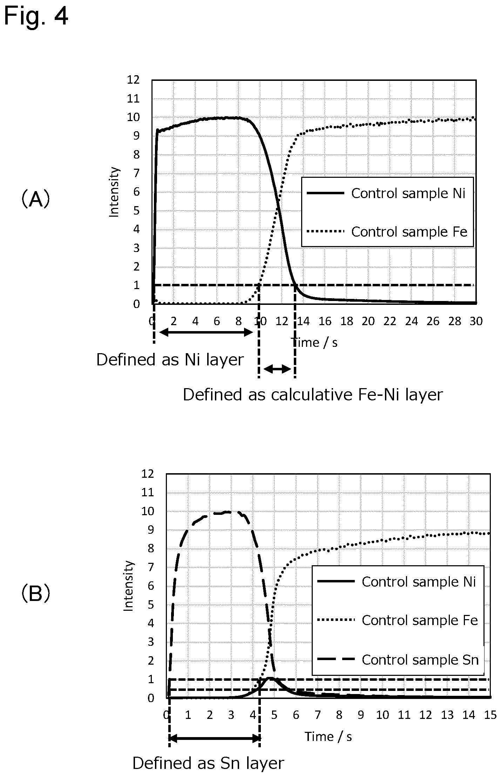

Further, Fig. 4(A) is a graph produced by GDS measurement of a standard sample in which a pure Ni plating layer is formed on an iron-based metal sheet, and Fig. 4(B) is a graph produced by GDS measurement of a standard sample in which a pure Sn plating layer is formed on a stainless sheet having strike Ni plating. It should be noted that the graphs shown in Figs. 4(A) and 4(B) are graphs made after correction with the correction factors described above. As shown in Fig. 4(A), a nickel layer is determined to be formed in the region at a depth where the intensities represented by the measured values are an Ni intensity of 1 or more, an Fe intensity of less than 1, and an Sn intensity of less than 0.2, and an iron-nickel alloy layer is determined to be formed in the region at a depth where the intensities represented by the measured values are an Ni intensity of 1 or more, an Fe intensity of 1 or more, and an Sn intensity of less than 0.2. In addition, as shown in Fig. 4(B), a tin layer is determined to be formed in the region at a depth where the intensities represented by the measured values are an Sn intensity of 0.2 or more, an Ni intensity of less than 1, and an Fe intensity of less than 1.

Next, in the surface-treated metal sheet for batteries 10, using a radio frequency glow discharge optical emission spectrometer, changes in Ni intensity, Sn intensity, and Fe intensity are continuously measured from the outermost surface toward the base material 20 in the depth direction, and the etching time (unit: sec) in the region where a nickel-tin alloy layer 40 is determined to be formed is measured. The etch rate $R_{Ni}$ of the pure Ni plating layer is considered as etch rate $R_{Ni-Sn}$ of the nickel-tin alloy layer, and then the thickness of the nickel-tin alloy layer 40 can be determined from the etch rate $R_{Ni-Sn}$ (unit: $\mu$m/sec) of the nickel-tin alloy layer and the etching time (unit: sec) in the region where the nickel-tin alloy layer 40 is determined to be formed.

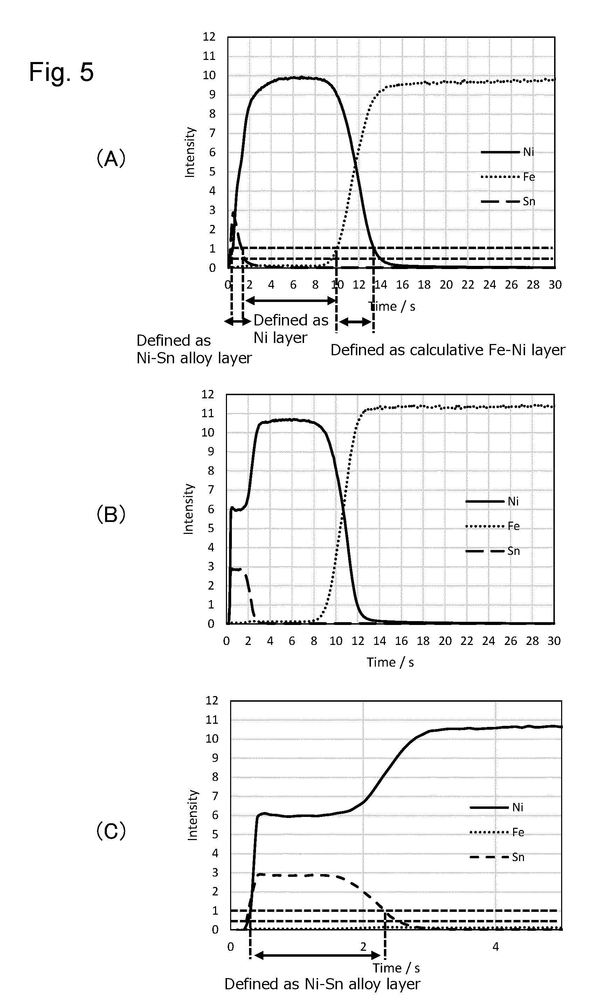

Fig. 5(A) is a graph produced by GDS measurement of the surface-treated metal sheet for batteries of Example 1 described below, Fig. 5(B) is a graph produced by GDS measurement of the surface-treated metal sheet for batteries of Example 5 described below, and Fig. 5(C) is an enlarged graph showing the data of Fig. 5(B) in the early part of the measurement. As shown in Fig. 5(C), the nickel-tin alloy layer 40 is determined to be formed in the region at a depth where the intensities represented by the measured values are an Ni intensity of 1 or more, an Sn intensity of 0.2 or more, and an Fe intensity of less than 1. Then, the thickness of the nickel-tin alloy layer 40 can be determined from the etching time (unit: sec) (horizontal axis) in this region and the etch rate $R_{Ni-Sn}$ (unit: $\mu$m/sec) of the nickel-tin alloy layer according to the following formula:

Etching time (unit: sec) in GDS measurement $\times$ Etch rate $R_{Ni-Sn}$ (unit: um/sec) of nickel-tin alloy layer = Thickness of nickel-tin alloy layer 40 (unit: $\mu$m)

In addition, with respect to the nickel-tin alloy layer 40, whether the surface-treated metal sheet for batteries 10 according to the present embodiment has a nickel-tin alloy layer 40 or not can be determined by performing the above-described X-ray diffraction (XRD) measurement, or performing both the radio frequency glow discharge optical emission spectroscopy (GDS) and the X-ray diffraction (XRD) measurement. Specifically, in X-ray diffraction (XRD) measurement, when the above-mentioned binary alloy of nickel and tin is contained, the metal sheet can be determined to have a nickel-tin alloy layer 40.

In the surface-treated metal sheet for batteries 10 according to the present embodiment, the percentage of Sn (atomic %) in the surface region on the side where the nickel-tin alloy layer 40 is formed is preferably 40 atomic % or more. When the percentage of Sn (atomic %) is controlled in the above-described range, the effect of suppressing gas generation can be further improved. From the viewpoint of further improving the effect of suppressing gas generation, the percentage of Sn (atomic %) in the surface region on the side where the nickel-tin alloy layer 40 is formed is more preferably 45 atomic % or more, even more preferably more than 50 atomic %. On the other hand, from the viewpoint regarding the electrolyte-resistant property, since it is sufficient that the nickel-tin alloy layer 40 is formed in the surface region or in an underlying layer of the tin layer 50, the percentage of Sn (atomic %) in the surface region on the side where the nickel-tin alloy layer 40 is formed is not particularly limited, and is 100° or less. In addition, after an anode reaction test described below, from the viewpoint of maintaining the percentage of Sn in the surface region constant, the percentage of Sn is more preferably 90 atomic % or less, even more preferably 80 atomic % or less.

Further, the outermost layer of the surface-treated metal sheet for batteries 10 can be a nickel-tin alloy layer 40 or a tin layer 50 as long as the percentage of Sn (atomic %) in the surface region on the side where the nickel-tin alloy layer 40 is formed is within the above-described range. In addition, a two-layer structure in which a tin layer 50 is formed as an overlaying layer of the nickel-tin alloy layer 40 is also possible.

The percentage of Sn (atomic %) in the surface region on the side where the nickel-tin alloy layer 40 is formed can be measured by scanning Auger electron spectroscopy (AES). Specifically, first, a 10 nm-depth etching is performed on the surface of a surface-treated metal sheet for batteries 10 on the side where the nickel-tin alloy layer 40 is formed using a scanning Auger electron spectrometer, and the etched surface is measured using the scanning Auger electron spectrometer. In the peak intensities obtained by the measurements, that of a peak at 830 to 860 eV is defined as a peak intensity of Ni, $I_{Ni}$, and that of a peak at 415 to 445 eV is defined as a peak intensity of Sn, $I_{Sn}$. From the peak intensities thus obtained, the percentage of Ni (atomic %) and the percentage of Sn (atomic %) can be calculated to determine the percentage of Sn. In these calculations, the peak intensity of Ni, $I_{Ni}$, and the peak intensity of Sn, $I_{Sn}$, can be divided by the relative sensitivity factors (RSF) corresponding to the elements to calculate the percentage of Ni (atomic %) and the percentage of Sn (atomic %), respectively. That is, when the relative sensitivity factor of Ni and the relative sensitivity factor of Sn are denoted as $RSF_{Ni}$ and $RSF_{Sn}$, respectively, the percentages can be calculated according to the following formulae:

$$\text{Percentage of Ni (atomic \%)} = (I_{Ni}/RSF_{Ni})/(I_{Ni}/RSF_{Ni}+I_{Sn}/RSF_{Sn}) \times 100$$

$$\text{Percentage of Sn (atomic \%)} = (I_{Sn}/RSF_{Sn})/(I_{Ni}/RSF_{Ni}+I_{Sn}/RSF_{Sn}) \times 100$$

In this context, the percentage of Ni (atomic %) and the percentage of Sn (atomic %) in the surface region refer to percentages obtained when the 10 nm-depth etching is performed using the above-described scanning Auger electron spectrometer.

The method for controlling the percentage of Sn in the surface region on the side where the nickel-tin alloy layer 40 is formed is not particularly limited, but is preferably, as described below, a method in which a nickel plating layer and a tin plating layer are formed on the base material 20 in this order, and a room-temperature diffusion treatment is performed, or a method in which a nickel plating layer and a tin plating layer are formed on the base material 20 in this order, and a thermal diffusion treatment is performed.

The method for forming a nickel-tin alloy layer 40 includes, but not particularly limited to, a method in which a nickel plating layer and a tin plating layer are formed on the base material 20 in this order, and diffusion at the interface between the nickel plating layer and the tin plating layer is caused at normal temperature (a room-temperature diffusion treatment), a method in which a nickel plating layer and a tin plating layer are formed in this order, and a thermal diffusion treatment is caused by heating, and the like. In addition, when the base material 20 is a metal sheet (including an electrolytic foil) based on Ni, it is also possible that a tin plating layer is formed on the base material 20, and a nickel-tin alloy layer 40 is formed in the same manner as described above.

In the method using a room-temperature diffusion treatment or the method using a thermal diffusion treatment, as the method for forming a nickel plating layer, a method of performing nickel plating using a nickel-plating bath on the base material 20 is preferred. Examples of the plating bath that can be used include plating baths usually used for nickel plating, such as a Watt bath, a sulfamate bath, a fluoroboric bath, and a chloride bath. For example, the nickel plating layer can be formed by using, as a Watt bath, a bath having a bath composition of 200 to 350 g/L nickel sulfate, 20 to 60 g/L nickel chloride, and 10 to 50 g/L boric acid, at a pH of 3.0 to 4.8 (preferably a pH of 3.6 to 4.6) and a bath temperature of 50 to 70°C, and under conditions in which the current density is 10 to 40 A/dm$^2$ (preferably 20 to 30 A/dm$^2$).

In the method using a room-temperature diffusion treatment or the method using a thermal diffusion treatment, as the method for forming a tin plating layer, a method of performing tin plating using a tin plating bath on the base material 20 on which a nickel plating layer is formed is preferred. The tin plating bath is not particularly limited, and examples of the method include methods using known plating baths such as a ferrostan bath, an MSA bath, a halogen bath, and a sulfuric acid bath.

The temperature for the treatment in the room-temperature diffusion treatment is not particularly limited, but is preferably 0°C or more and less than 50°C, and the duration of the treatment is not particularly limited, but is preferably 5 hours or more, more preferably 120 hours or more, even more preferably 360 hours or more, particularly preferably 720 hours or more. When the room-temperature diffusion treatment is performed, the nickel-tin alloy layer 40 can be made to contain primarily either $Ni\text{-}Sn_{40\text{-}42}$ or $Ni\text{-}Sn_{46\text{-}48}$ as an alloy phase. On the other hand, in order to make a nickel-tin alloy layer 40 that contains both $Ni\text{-}Sn_{40\text{-}42}$ and $Ni\text{-}Sn_{46\text{-}48}$, preferably the temperature for the treatment is 25°C or more and the duration of the treatment is 120 hours or more, and more preferably the temperature for the treatment is 25°C or more and the duration of the treatment is 720 hours or more.

When the thermal treatment is performed by box annealing as a method for performing the thermal diffusion treatment, the thermal treatment conditions is preferably 50°C or more and 700°C or less, and more preferably 50°C or more and 600°C or less. In addition, soak time (time after the temperature reaches a target temperature) in the thermal treatment by box annealing is not particularly limited, but is preferably 0.5 to 8 hours, and more preferably 1 to 5 hours. Further, the treatment is preferably performed such that the sum total of heating time, soak time, and cooling time is in the range of 3 to 80 hours.

When the thermal treatment is performed by box annealing, thermal treatment conditions can be selected based on the type of alloy phase contained in the nickel-tin alloy layer 40. For example, when the nickel-tin alloy layer 40 is made to contain primarily either $Ni\text{-}Sn_{40\text{-}42}$ or $Ni\text{-}Sn_{46\text{-}48}$ as an alloy phase, the thermal treatment in the box annealing is preferably performed at a relatively low temperature. The thermal treatment temperature in the box annealing is preferably 50°C or more and less than 100°C, more preferably 50°C or more and less than 80°C, and the soak time is preferably 0.5 to 8 hours, more preferably 1 to 5 hours. On the other hand, in order to make a nickel-tin alloy layer 40 that contains both $Ni\text{-}Sn_{40\text{-}42}$ and $Ni\text{-}Sn_{46\text{-}48}$, preferably the thermal treatment temperature is 50°C or more and less than 100°C and the duration of the thermal treatment is 1 to 8 hours, and more preferably the thermal treatment temperature is 75°C or more and less than 100°C and the duration of the thermal treatment is 0.5 to 5 hours.

In order to make a nickel-tin alloy layer 40 that contains primarily $Ni_3Sn_4$ as an alloy phase, the thermal treatment in the box annealing is preferably performed at a higher temperature than that in the above-described case where the nickel-tin alloy layer 40 is made to contain primarily either $Ni\text{-}Sn_{40\text{-}42}$ or $Ni\text{-}Sn_{46\text{-}48}$. The thermal treatment temperature in the box annealing is preferably 100°C or more and less than 300°C, more preferably 150°C or more and less than 300°C, even more preferably 150°C or more and less than 250°C, and the soak time is preferably 1 to 8 hours, more preferably 1 to 5 hours.

In addition, when the nickel-tin alloy layer 40 is made to contain primarily $Ni_3Sn_2$ as an alloy phase, the thermal treatment in the box annealing is preferably performed at a higher temperature than that in the above-described case where the nickel-tin alloy layer 40 is made to contain primarily $Ni_3Sn_4$. The thermal treatment temperature in the box annealing is preferably 300°C or more and 700°C or less, more preferably 300°C or more and 600°C or less, and the soak time is preferably 1 to 8 hours, more preferably 1 to 5 hours.

The method for making the nickel-tin alloy layer 40 that contains any of $Ni_3Sn_4$, $Ni_3Sn_2$, $Ni\text{-}Sn_{40\text{-}42}$, and $Ni\text{-}Sn_{46\text{-}48}$ is not limited to the above-described thermal treatment, but can be continuous annealing.

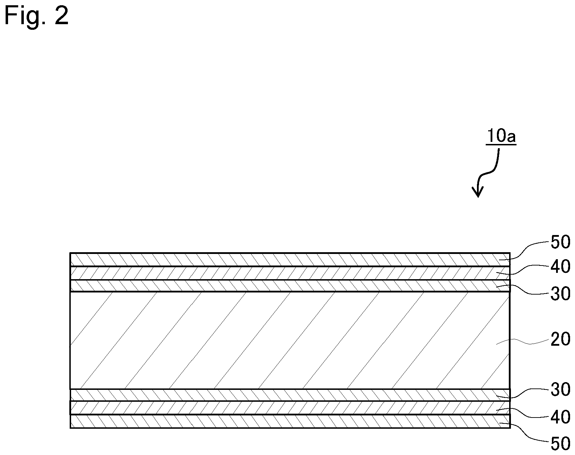

On the other hand, in the present embodiment, as the surface-treated metal sheet for batteries 10a shown in Fig. 2, a constitution further comprising a tin layer 50 on the nickel-tin alloy layer 40 is also possible. For example, the tin layer 50 can be formed, using, for example, the above-described method using a room-temperature diffusion treatment or the above-described method using a thermal diffusion treatment, by forming the nickel-tin alloy layer 40 such that part of the tin plating layer remains thereon. That is, the tin layer 50 can be formed using, for example, a method in which a nickel plating layer and a tin plating layer are formed on the base material 20 in this order, and then a room-temperature diffusion treatment is performed, or a method in which a thermal diffusion treatment is performed at a relatively low temperature.

The thickness of the tin layer 50 is not particularly limited, but is preferably 2.0 $\mu$m or less, more preferably less than 1.0 um, even more preferably less than 0.5 um, still more preferably less than 0.3 um, particularly preferably less than 0.2 um. The thickness of the tin layer 50 within the above-described range would not adversely affect the battery performance. The lower limit of the thickness of the tin layer 50 is not particularly limited, but is preferably 0.01 um or more, more preferably 0.05 um or more, particularly preferably 0.1 um or more.

The thickness of the tin layer 50 can be controlled by, for example, regulating the conditions in the room-temperature diffusion treatment or the thermal diffusion treatment.

The thickness of the tin layer 50 in a surface-treated metal sheet for batteries 10 that is determined to have a tin layer based on a diffraction peak of Sn found in X-ray diffraction (XRD) measurement can be determined by a radio frequency glow discharge optical emission spectrometer. Specifically, in a manner similar to that in the above-described measurement of the thickness of the nickel-tin alloy layer 40, in the surface-treated metal sheet for batteries 10, using a radio frequency glow discharge optical emission spectrometer, the Sn intensity is measured from the outermost surface toward the base material 20 in the depth direction to determine the region where the tin layer 50 is formed, and then the thickness of the tin layer 50 can be determined from the measured Sn intensity and the etch rate $R_{Sn}$ of the pure Sn plating layer.

<Nickel layer 30>

As shown in Fig. 1, the surface-treated metal sheet for batteries 10 according to the present embodiment further comprises a nickel layer 30 as an underlying layer of the nickel-tin alloy layer 40. Although Fig. 1 shows an exemplary constitution that further comprises a nickel layer 30, the present invention is not particularly limited to this constitution, and a constitution with no nickel layer 30 is also possible.

The thickness of the nickel layer 30 is preferably 0.05 to 5.00 $\mu$m, more preferably 0.15 to 3.00 um, even more preferably 0.25 to 3.00 $\mu$m. When the nickel layer 30 is formed with the above-described thickness, the electrolyte-resistant property of the surface-treated metal sheet for batteries 10 can be further improved.

The thickness of the nickel layer 30 in a surface-treated metal sheet for batteries 10 that is determined to have a nickel layer based on a diffraction peak of Ni found in X-ray diffraction (XRD) measurement can be determined by a radio frequency glow discharge optical emission spectrometer. Specifically, in a manner similar to that in the above-described measurement of the thickness of the nickel-tin alloy layer 40, in the surface-treated metal sheet for batteries 10, using a radio frequency glow discharge optical emission spectrometer, the Ni intensity is measured from the outermost surface toward the base material 20 in the depth direction to determine the region where the nickel layer 30 is formed, and then the thickness of the nickel layer 30 can be determined from the measured Ni intensity and the etch rate $R_{Ni}$ of the pure Ni plating layer.

The method for forming the nickel layer 30 is not particularly limited, but the nickel layer 30 can be formed, using, for example, the above-described method using a room-temperature diffusion treatment or the above-described method using a thermal diffusion treatment, by forming the nickel-tin alloy layer 40 such that part of the nickel plating layer formed on the base material 20 remains thereon. That is, whether the nickel layer 30 is formed or not and the thickness of the nickel layer 30 can be controlled, for example, by regulating the thickness of the nickel plating layer formed or regulating the treatment conditions when a nickel plating layer and a tin plating layer are formed on the base material 20 in this order, and then a room-temperature diffusion treatment or a thermal diffusion treatment is performed.

The surface-treated metal sheet for batteries 10 according to the present embodiment can further comprise an iron-nickel diffusion layer as an underlying layer of the nickel layer 30. The iron-nickel diffusion layer can be formed by using an iron-based metal sheet as the base material 20 and forming a nickel plating layer on the base material 20, and then performing a thermal treatment. The nickel plating conditions for forming the nickel plating layer are not particularly limited, but the conditions can be similar to those described above for forming the nickel plating layer for forming the nickel-tin alloy layer 40. The thermal treatment conditions are not particularly limited. When the thermal treatment is performed by box annealing, the thermal treatment temperature can be preferably more than 400°C and 600°C or less, and more preferably 450°C or more and 600°C or less, and the soak time can be preferably 0.5 to 8 hours. On the other hand, when the thermal treatment is performed by continuous annealing, the thermal treatment temperature can be preferably 600°C or more and 900°C or less, more preferably 600°C or more and 800°C or less, and the duration of the thermal treatment can be preferably 3 to 120 seconds. In addition, when an iron-nickel diffusion layer is formed, a relatively high temperature is used in the thermal treatment conditions for forming the iron-nickel diffusion layer, and thus it is desirable that the nickel-tin alloy layer 40 is formed after the iron-nickel diffusion layer is formed (i.e., after the thermal treatment for forming the iron-nickel diffusion layer is performed).

In the surface-treated metal sheet for batteries 10 according to the present embodiment, the deposited amount of tin (deposited amount of Sn) on the side where the nickel-tin alloy layer 40 is formed is preferably 0.05 to 15.0 g/m$^2$, more preferably 0.5 to 15.0 g/m$^2$, even more preferably 1.0 to 10.0 g/m$^2$, still more preferably 1.0 to 7.0 g/m$^2$. In addition, in the surface-treated metal sheet for batteries 10 according to the present embodiment, when an iron-based metal sheet is used as a base material 20, the deposited amount of nickel (deposited amount of Ni) on the side where the nickel-tin alloy layer 40 is formed is preferably 2.1 to 65.0 g/m$^2$, more preferably 3.0 to 50.0 g/m$^2$, particularly preferably 3.5 to 25.0 g/m$^2$. The deposited amount of tin and the deposited amount of nickel in the surface-treated metal sheet for batteries 10 can be determined, for example, by X-ray fluorescence measurement or by using an ICP optical emission spectrometer. In addition, since the above-described deposited amount of tin and the above-described deposited amount of nickel are those on the side where the nickel-tin alloy layer 40 is formed, when the nickel-tin alloy layers 40 are formed on both sides as shown in Fig. 1, the deposited amount of Sn or Ni on one side, rather than the deposited amount of Sn or Ni on both sides, is preferably within the above-described ranges. In addition, when the nickel layer 30 or the tin layer 50 is present on the surface where the nickel-tin alloy layer 40 is formed, as shown in Fig. 1 or 2, the ranges described above are applicable to the total amount of the deposited Sn and that of the deposited Ni, respectively.

The surface-treated metal sheet for batteries 10 according to the present embodiment comprises a base material 20 which is a metal sheet based on iron or nickel, and a nickel-tin alloy layer 40 on at least one side of the metal sheet as the base material 20, can suppress gas generation, and has an excellent electrolyte-resistant property. In particular, when an alkaline electrolyte solution is used as an electrolyte solution, the surface-treated metal sheet for batteries 10 according to the present embodiment exerts a particularly excellent effect of suppressing gas generation and a particularly excellent electrolyte-resistant property. Accordingly, based on these properties, the surface-treated metal sheet for batteries 10 according to the present embodiment can be preferably used as a current collector of a positive electrode or a negative electrode or as a battery container, in particular, more preferably used as a current collector or a battery container in alkaline secondary batteries using an alkaline electrolyte solution, and, above all, particularly preferably used as a current collector or a battery container in nickel-zinc batteries.

EXAMPLES

The present invention will be more specifically described by way of the following examples, but the present invention is not limited to the examples.

The methods for evaluating the properties are as follows.

<Measurement of deposited amount of nickel and deposited amount of tin>

The deposited amount of nickel and the deposited amount of tin in a surface-treated metal sheet obtained in each of Examples and Comparative Examples were quantified using calibration curves obtained by X-ray fluorescence (XRF) measurement. Rigaku ZSX100e was used as an X-ray fluorescence analyzer. In the X-ray fluorescence measurement, it was confirmed that the metal elements contained in each of the nickel layer, the nickel-tin alloy layer, and the tin layer of the surface-treated metal sheet can be quantified by calibration curve method.

<Measurement of thickness of nickel layer and thickness of nickel-tin alloy layer>

For the surface-treated metal sheets obtained in Examples and Comparative Examples, the thickness of the nickel layer and the thickness of the nickel-tin alloy layer of the surface-treated metal sheet were measured by radio frequency glow discharge optical emission spectroscopy (GDS). The GDS measurement was performed under the following conditions.

· GDS measuring instrument: Radio frequency glow discharge optical emission spectrometer (available from HORIBA, GD-Profiler 2)
· Detection mode: HDD mode
· Anode diameter: 4 mm
· Excitation mode: Normal
· Gas pressure of light source: 600 Pa
· Output of light source: 35 W
· Detection wavelength: Ni: 352 nm, Sn: 190 nm, Fe: 371 nm

Specific procedures for calculating the thickness of each layer are as follows.

First, two standard samples, that is, a standard sample in which a pure Ni plating layer having a thickness of 0.79 um was formed on a steel sheet (a cold-rolled steel sheet of a low-carbon aluminum-killed steel) and a standard sample in which a pure Sn plating layer having a thickness of 1.37 um was formed on a stainless sheet having strike Ni plating (plating thickness: 50 nm or less) were prepared. Next, using a GDS measuring instrument, the above-described two standard samples were each etched by sputtering and simultaneously measured for Ni intensity, Sn intensity, and Fe intensity in the thickness direction. Fig. 4(A) is a graph produced by GDS measurement of the standard sample in which the pure Ni plating layer is formed, and Fig. 4(B) is a graph produced by GDS measurement of the standard sample in which the pure Sn plating layer is formed.

Next, the Ni intensity data, the Sn intensity data, and the Fe intensity data obtained by measuring each of the standard samples were corrected by intensity data correction such that the maximum values of these pieces of intensity data became mostly comparable. Specifically, using the above-described two standard samples, correction factors were defined such that each of the maximum values of the Ni intensity data, the Sn intensity data, and the Fe intensity data was corrected to 10, and the pieces of intensity data were corrected using the correction factors obtained above.

Then, in the corrected data obtained above, Ni was determined to be detected in the region at a depth where the Ni intensity was 1 or more, Sn was determined to be detected in the region at a depth where the Sn intensity was 0.2 or more, and Fe was determined to be detected in the region at a depth where the Fe intensity was 1 or more, the boundaries of these layers were defined based on whether or not these elements were detected in each layer, and the sputtering time in the region where the nickel layer was formed and the sputtering time in the region where the tin layer was formed were determined. Further, X-ray fluorescence measurement was performed as described above, the thicknesses (unit: um) of the nickel layer and the tin layer were calculated from the amounts of deposited nickel and deposited tin, respectively, and the etch rates (unit: $\mu$m/sec) of the nickel layer and the tin layer were calculated by dividing the thicknesses (unit: $\mu$m) by sputtering times of the nickel layer and the nickel layer, respectively. The results are shown bellow.

Etch rate $R_{Ni}$ of nickel layer: 0.08177 um/sec
Etch rate $R_{Sn}$ of tin layer: 0.3263 $\mu$m/sec
Etch rate $R_{Ni-Sn}$ of nickel-tin alloy layer (the same as etch rate $R_{Ni}$ of nickel layer): 0.08177 um/sec

Next, using a GDS measuring instrument, the surface-treated metal sheet obtained in each of Examples and Comparative Examples was etched by sputtering and simultaneously measured for Ni intensity, Sn intensity, and Fe intensity in the regions at their corresponding depths, and then the thickness of the nickel layer 30 and the thickness of the nickel-tin alloy layer 40 were calculated from the Ni intensity, the Sn intensity, and the Fe intensity obtained above and the etch rate $R_{Ni}$ of the nickel layer, the etch rate $R_{Sn}$ of the tin layer, and the etch rate $R_{Ni-Sn}$ of the nickel-tin alloy layer calculated above.

Specifically, the thickness of the nickel-tin alloy layer 40 was calculated as follows. The nickel-tin alloy layer 40 was determined to be formed in the region at a depth where the intensities represented by the measured values were an Ni intensity of 1 or more, an Sn intensity of 0.2 or more, and an Fe intensity of less than 1. Then, the thickness of the nickel-tin alloy layer 40 was determined from the etching time (unit: sec) (horizontal axis) in this region and the etch rate $R_{Ni-Sn}$ (unit: $\mu$m/sec) of the nickel-tin alloy layer according to the following formula:

Etching time (unit: sec) in GDS measurement $\times$ Etch rate $R_{Ni-Sn}$ (unit: um/sec) of nickel-tin alloy layer = Thickness of nickel-tin alloy layer 40 (unit: $\mu$m)

In addition, the nickel layer 30 was determined to be formed in the region at a depth where the intensities represented by the measured values were an Ni intensity of 1 or more, an Sn intensity of less than 0.2, and an Fe intensity of less than 1, and then the thickness of the nickel layer 30 was determined from the etching time (unit: sec) (horizontal axis) in this region and etch rate $B_{Ni}$ (unit: um/sec) of the nickel layer according to the following formula:

Etching time (unit: sec) in GDS measurement $\times$ Etch rate $R_{Ni}$ (unit: um/sec) of nickel layer = Thickness of nickel layer 30 (unit: $\mu$m)

<X-ray diffraction (XRD) measurement (identification of alloy phase)>

The surface-treated metal sheet obtained in each of Examples and Comparative Examples was analyzed by X-ray diffraction (XRD) measurement to identify the alloy phase contained in the nickel-tin alloy layer 40. In addition, in the X-ray diffraction (XRD) measurement, it was also confirmed whether or not a nickel layer and a tin layer, which were not alloyed with each other, were present.

As an X-ray diffractometer, Rigaku SmartLab was used, and a 20 mm $\times$ 20 mm piece excised from the thus obtained surface-treated metal sheet was used as a test sample. Specific conditions for the X-ray diffraction (XRD) measurement were as follows:

(Equipment specifications)

- X-ray source: CuK$\alpha$
- Goniometer radius: 300 nm
- Optics: Focusing method

(Slit system (X-ray source side))

- Soller slit: 5°

- Height limiting slit: 5 mm
- Divergence slit: 1/2°

(Slit system (detector side))

- Scattering slit: 1/2°
- Seller slit: 5°
- Receiving slit: 0.3 mm
- Monochromatization method: Counter monochromator method · Detector: Scintillation counter

(Parameters for measurement)

- Tube voltage-Tube current: 45 kV-200 mA
- Scan axis: $2\theta/\theta$
- Scan mode: Continuous
- Data collection range: $2\theta$ range of 30 to 100° · Scanning speed: 10°/min
- Step: 0.05°

Using Rigaku Integrated X-ray powder diffraction software PDXL, the background was eliminated from the peak intensity values thus obtained, and data analysis was performed.

In this analysis, the following data had almost the same peak patterns. However, for example, in Comparative Example 3 in which annealing was carried out at 800°C, a ternary alloy FeNiSn was identified. Thus, in this Example, the alloy phase was properly identified by using data obtained by such GDS measurement together.

$Ni_3Sn_2$: ICDD-PDF card 01-072-2561
$Fe_{2.5}Ni_{2.5}Sn$: ICDD-PDF card 03-065-7279

In addition, whether a nickel layer and a tin layer were present or not was determined based on the presence or absence of diffraction peaks of Ni and the presence or absence of diffraction peaks of Sn, respectively. The peaks of Ni were determined based on a (200) plane peak found at a diffraction angle $2\theta$ = 51.5 to 52.5°, a (220) plane peak found at a diffraction angle $2\theta$ = 76 to 77°, and a (311) plane peak found at a diffraction angle $2\theta$ = 92.5 to 93.5° (ICDD-PDF card 03-065-2865). On the other hand, the peak of Sn was determined based on a (211) plane peak found at diffraction angle $2\theta$ = 44.7 to 45.2° (ICDD-PDF card 01-072-3240).

<Scanning Auger electron spectroscopy (AES)>

In some metal sheets among the surface-treated metal sheets obtained in Examples, the percentage of Ni (atomic %) and the percentage of Sn (atomic %) in the surface region on the side where the nickel-tin alloy layer 40 was formed were measured by scanning Auger electron spectroscopy (AES). Specifically, first, 10 nm-depth etching was performed on the surface of the surface-treated metal sheet for batteries 10 on the side where the nickel-tin alloy layer 40 was formed using a scanning Auger electron spectrometer, and the etched surface was measured using the scanning Auger electron spectrometer. Then, in the peak intensities obtained by the measurement, that of a peak at 830 to 860 eV was defined as a peak intensity of Ni, $I_{Ni}$, and that of a peak at 415 to 445 eV was defined as a peak intensity of Sn, $I_{Sn}$. From the peak intensities thus obtained, the percentage of Ni (atomic %) and the percentage of Sn (atomic %) were calculated. Specific conditions for the scanning Auger electron spectroscopy (AES) were as follows:

- Acceleration voltage (probe energy): 10 kV
- Beam current (probe current): $1.0 \times 10^{-8}$• •
- Electron probe scan mode (Probe scan mode): Scan
- Electron probe diameter (Probe diameter): 0 $\mu$m
- Size: 60 $\times$ 48 pm
- Stage tilt angle (Probe polar angle to sample normal): 0°
- Analyzer analysis mode (Analyzer mode): CRR (M5)
- Energy at start of measurement (Abscissa start): 30 eV

- Energy at end of measurement (Abscissa end): 1000 eV
- Energy step (Abscissa increment): 0.35 eV
- Measurement time per measurement point (Collection time (Dwell time)): 20 ms
- Number of accumulation (Number of scans): 10 times
- Neutralization gun ON/OFF control (Neutralization active mode): OFF

In these calculation, the peak intensity of Ni, $I_{Ni}$, and the peak intensity of Sn, $I_{Sn}$, were divided by the relative sensitivity factors (RSF) corresponding to the elements to calculate the percentage of Ni (atomic %) and the percentage of Sn (atomic %), respectively. More specifically, the relative sensitivity factor of Ni and the relative sensitivity factor of Sn were denoted as $RSF_{Ni}$ and $RSF_{Sn}$, respectively, and the percentages were calculated according to the following formulae:

$$\text{Percentage of Ni (atomic \%)} = (I_{Ni}/RSF_{Ni})/(I_{Ni}/RSF_{Ni}+I_{Sn}/RSF_{Sn}) \times 100$$

$$\text{Percentage of Sn (atomic \%)} = (I_{Sn}/RSF_{Sn})/(I_{Ni}/RSF_{Ni}+I_{Sn}/RSF_{Sn}) \times 100$$

In these formulae, $RSF_{Ni}$ was 0.469 and $RSF_{Sn}$ was 0.718.

<Evaluation of electrolyte-resistant property>

In the surface-treated metal sheet obtained in each of Examples and Comparative Examples, the deposited amount of Ni and the deposited amount of Sn contained in the surface-treated metal sheet were measured before and after an anode reaction test using an alkaline solution (30% by weight potassium hydroxide solution), and dissolution rates of the amounts of deposited Sn were calculated before and after the anode reaction test to evaluate the electrolyte-resistant property. Specifically, to mimic anode reactions of the negative electrode current collector sheet during discharging, in which the dissolution reaction tends to proceed, it was intended to evaluate an anti-dissolution property (electrolyte-resistant property) in an alkaline solution during discharging, and thus the anode reaction test was performed by passing electric current using an electrochemical measurement method. The amounts of deposited Sn before and after the anode reaction test were determined by the above-described X-ray fluorescence (XRF) measurement.

The electrolyte-resistant property was evaluated by the following evaluation criteria 1 or 2. In this evaluation, when it was rated as "··" or "o" in any one of the evaluations by the following evaluation criteria 1 and evaluation criteria 2, the state of the deposited Sn was evaluated to be sufficiently maintained after the anode reaction test, and the metal sheet was evaluated to have a sufficient electrolyte-resistant property. The evaluation by the evaluation criteria 1 was performed on Examples and Comparative Examples shown in Table 1A, and the evaluation by the evaluation criteria 2 was performed on Examples and Comparative Example shown in Table 1B.

(Evaluation criteria 1)

In the evaluation by evaluation criteria 1, the dissolution rate of the deposited amount of Sn was calculated from the amounts of deposited Sn before and after the anode reaction test determined in the above measurement, and the electrolyte-resistant property was evaluated by the following criteria.

Dissolution rate (%) of deposited amount of Sn = {(Deposited amount of Sn before anode reaction) - (Deposited amount of Sn after anode reaction)/(Deposited amount of Sn before anode reaction)} × 100

When the dissolution rate of the deposited amount of Sn between before and after the anode reaction test was 10% or less, it was denoted by "••", when the rate of change in the deposited amount of Sn between before and after the anode reaction test was 40% or less, it was denoted by "o", and when the rate of change in the deposited amount of Sn between before and after the anode reaction test was more than 40%, it was denoted by "×".

(Evaluation criteria 2)

In evaluation criteria 2, the electrolyte-resistant property was evaluated from the deposited amount of Sn after the anode reaction test determined in the above measurement by the following criteria.

When the deposited amount of Sn after the anode reaction test was 1.0 $g/m^2$ or more, it was denoted by "o", and when the deposited amount of Sn was less than 1.0 g/m$^2$, it was denoted by "×".

The anode reaction test was carried out under the following conditions:

- Electrochemical Measurement System: HZ 5000 (available from HOKUTO DENKO)
- Test electrode: Test sample (20 mm × 20 mm)
- Counter electrode: Cu plate
- Reference electrode: Ag/AgCl (saturated KCl)
- Electrolyte solution: 30% by weight potassium hydroxide solution
- Current density: 50 mA/cm$^2$
- Method for measurement: Chronopotentiometry
- Quantity of electric charge: 21 C/cm$^2$

<Evaluation of suppression of gas generation by corrosion current density measurement>

The surface-treated metal sheet obtained in each Example and Comparative Example was immersed in an alkaline solution, and then a corrosion current density was measured to evaluate its gas generation-suppressing effect. Specifically, by an anode reaction test as in the above-described method for evaluation of the electrolyte-resistant property, a surface-treated metal sheet after the anode reaction was obtained. Next, as a test to mimic a local cell with deposited Zn, the thus obtained surface-treated metal sheet was immersed in an alkaline solution, and then the corrosion current density was measured using an electrochemical measurement system equipped with a Zn sheet as a counter electrode to evaluate suppression of gas generation. As the corrosion current density after 30 seconds has passed from the immersion in the alkaline solution is lower, the effect of suppressing gas generation can be determined to be higher.

When the corrosion current density was 20 mA/cm$^2$ or less, it was denoted by "• •", when the corrosion current density was 50 mA/cm$^2$ or less, it was denoted by "o", and when the corrosion current density was more than 50 mA/cm$^2$, it was denoted by "×".

The corrosion current density measurement was carried out under the following conditions, and a corrosion current density (unit: mA/cm$^2$) generated between the test electrode and the counter electrode in a 30% by weight potassium hydroxide solution was measured.

- Measurement System: HZ 5000 (available from HOKUTO DENKO)
- Test electrode: Zn sheet (20 × 20 mm, thickness: 0.5 mm)
- Counter electrode: Test sample (measurement diameter: φ6 mm • •
- Method for measurement: Chronocoulometry

<Example 1>

First, as a base material 20, a cold-rolled steel sheet (thickness: 110 μm) of a low-carbon aluminum-killed steel having the following chemical composition was prepared.

C: 0.04% by weight, Mn: 0.32% by weight, Si: 0.01% by weight, P: 0.012% by weight, S: 0.014% by weight, Remainder: Fe and inevitable impurities

Next, the thus prepared base material 20 was pickled by electrolytic degreasing and sulfuric acid immersion to form nickel plating layers on both sides of the base material 20. The nickel plating was carried out under the following conditions. The treatment in the nickel plating was continued for a period such that the deposited amount of nickel came to the amount shown in Tables 1A and 1B.

(Bath composition: Watt bath)

Nickel sulfate hexahydrate: 250 g/L
Nickel chloride hexahydrate: 45 g/L
Boric acid: 30 g/L

(Plating conditions)

Bath temperature: 60°C

pH: 4.0 to 5.0
Stirring: air stirring or jet stirring
Current density: 10 A/dm$^2$

Next, tin plating was carried out on the base material 20 on which the nickel plating layers were formed to form tin plating layers on both sides of the base material 20 on which the nickel plating layers were formed. The tin plating was carried out under the following conditions. The treatment in the tin plating was continued for a period such that the deposited amount of tin came to the amount shown in Tables 1A and 1B.

(Bath composition)

Stannous sulfate: 80 g/L
Phenolsulfonic acid: 60 g/L
Additive A (ethoxylated α-naphthol): 3 g/L
Additive B (ethoxynaphtholsulfonic acid): 3 g/L

(Plating conditions)

pH: 1 or less
Bath temperature: 40°C
Current density: 3 A/dm$^2$

Next, the steel sheet having the nickel plating layer and the tin plating layer formed above was subjected to a thermal treatment at a temperature of 85°C for 0.5 hours to obtain a surface-treated metal sheet having nickel-tin alloy layers 40. Then, each of the above-described measurements was performed on the thus obtained surface-treated metal sheet. The results are shown in Tables 1A and 1B.
Further, the percentage of Ni (atomic %) and the percentage of Sn (atomic %) in the surface region on the side where the nickel-tin alloy layer 40 was formed were measured by scanning Auger electron spectroscopy (AES) according to the method described above. As a result, the percentage of Ni was 18 atomic % and the percentage of Sn was 82 atomic %. The results are shown in Table 2. In addition, the thickness of the tin layer of the thus obtained surface-treated metal sheet was 0.10 pm.
As shown in Tables 1A and 1B, the nickel-tin alloy layer 40 in Example 1 can be determined to contain nickel-tin alloys that give diffraction peaks in the region of diffraction angle 2θ = 40 to 42° and in the region of diffraction angle 2θ = 46 to 48°, that is, contain both Ni-Sn$_{40-42}$ and Ni-Sn$_{46-48}$ as alloy phases.
The reasons for this are as follows. First, in the graph shown in Fig. 4(A) produced by GDS measurement of a standard sample in which a pure Ni plating layer is formed on an iron-based metal sheet, although the presence of an iron-nickel layer can be assumed by calculation, only Fe and Ni peaks are actually identified, while no peak of iron-nickel alloy can be identified by XRD measurement. Accordingly, it can be determined that no diffusion of Fe and Ni can occur by a room-temperature diffusion treatment, and thus the layer is determined to be a calculative iron-nickel layer. That is, it is determined that although an iron-nickel layer seems to be formed at the interface between the nickel layer and the iron layer by GDS measurement, the iron-nickel layer is not actually formed. On the other hand, Fig. 5(A) is a graph produced by GDS measurement of the surface-treated metal sheet for batteries in Example 1. As shown in Fig. 5(A), the Ni intensity, the Sn intensity, and the Fe intensity can be identified by GDS measurement, and further peaks represented by those in the regions of 2θ = 40 to 42° and 46 to 48° are observed by XRD measurement, besides the peaks of pure iron, pure nickel, and pure tin. Accordingly, these peaks can be determined to be peaks of a nickel-tin alloy, and are identified as two peaks of Ni-Sn$_{40-42}$ and Ni-Sn$_{46-48}$.

<Example 2>

In a manner similar to that in Example 1, a steel sheet having a nickel plating layer and a tin plating layer was obtained. The thus obtained steel sheet having a nickel plating layer and a tin plating layer was subjected to a thermal treatment by box annealing in a reducing atmosphere under the following conditions: a thermal treatment temperature (temperature maintained) of 50°C and a soak time (time maintained) of 3 hours. As a result, a surface-treated metal sheet having a nickel-tin alloy layer 40 was obtained. In the thermal treatment by box annealing, the heating period was 1 hour and the cooling period was 1 hour. The treatment in the nickel plating or the tin plating was continued for a period such that the deposited amount of nickel or the deposited amount of tin came to the amount shown in Tables 1A and 1B. Then, each of the above-described measurements was performed on the thus obtained surface-treated metal sheet. The results are shown in Tables 1A and 1B. The thickness of the tin layer of the thus obtained surface-treated metal sheet was 0.16 μm.

<Examples 3 to 9>

A thermal treatment by box annealing was performed as in Example 2 except that the thermal treatment temperature (temperature maintained) in the box annealing shown in Table 1A was used instead to obtain surface-treated metal sheets having a nickel-tin alloy layer 40. In the thermal treatment by box annealing, the heating period was 1 hour and the cooling period was 1 hour. The treatment in the nickel plating or the tin plating was continued for a period such that the deposited amount of nickel or the deposited amount of tin came to the amount shown in Table 1A. Then, each of the above-described measurements was performed on the thus obtained surface-treated metal sheets. The results are shown in Table 1A.

In Examples 5 and 8, the percentage of Ni (atomic %) and the percentage of Sn (atomic %) in the surface region on the side where the nickel-tin alloy layer 40 was formed were measured by scanning Auger electron spectroscopy (AES) according to the method described above. As a result, the percentage of Ni was 44 atomic % and the percentage of Sn was 56 atomic % in Example 5, and the percentage of Ni was 58 atomic % and the percentage of Sn was 42 atomic % in Example 8. The results are shown in Table 2.

<Examples 10 to 12>

Surface-treated metal sheets having a nickel-tin alloy layer 40 were obtained as in Example 5 except that the time of nickel plating and the time of tin plating were changed such that the deposited amount of nickel and the deposited amount of tin came to those shown in Table 1A. Then, each of the above-described measurements was performed on the thus obtained surface-treated metal sheets. The results are shown in Table 1A.

<Example 13>

A surface-treated metal sheet having a nickel-tin alloy layer 40 was obtained as in Example 5 except that, as a base material 20, a perforated material having perforations with an aperture ratio of 38% and having a thickness of 60 μm was used. The treatment in the nickel plating or the tin plating was continued for a period such that the deposited amount of nickel or the deposited amount of tin came to the amount shown in Table 1A. Then, each of the above-described measurements was performed on the thus obtained surface-treated metal sheet. The results are shown in Table 1A.

<Example 14>

A surface-treated metal sheet having a nickel-tin alloy layer 40 was obtained as in Example 5 except that, as a base material 20, an electrolytic foil formed of pure iron (an electrolytic foil with an iron content of equal to or more than 99.9% by weight) having a thickness of 6 pm was used, and the time of nickel plating and the time of tin plating were changed such that the deposited amount of nickel and the deposited amount of tin came to those shown in Table 1A. Then, each of the above-described measurements was performed on the thus obtained surface-treated metal sheet. The results are shown in Table 1A.

<Example 15>

A surface-treated metal sheet having a nickel-tin alloy layer 40 was obtained as in Example 5 except that, as a base material 20, an electrolytic foil formed of pure nickel (an electrolytic foil with an nickel content of equal to or more than 99.9% by weight) having a thickness of 6 um was used, nickel plating was not performed, and the time of tin plating was changed such that the deposited amount of tin came to that shown in Table 1A. Then, each of the above-described measurements was performed on the thus obtained surface-treated metal sheet. The results are shown in Table 1A.

<Example 16>

A base material was prepared as in Example 1. The treatment in the nickel plating or the tin plating was continued for a period such that the deposited amount of nickel or the deposited amount of tin came to the amount shown in Table 1B. With respect to the deposited amount of nickel and the deposited amount of tin, a nickel plating layer was formed on the base material and then the deposited amount of nickel was measured, and subsequently a tin plating layer was formed on the nickel plating layer and then the deposited amount of tin was measured.

Next, the steel sheet having the nickel plating layer and the tin plating layer formed above was allowed to stand at a temperature of 35°C for 720 hours to perform a room-temperature diffusion treatment. As a result, a surface-treated metal sheet having a nickel-tin alloy layer 40 was obtained. Then, each of the above-described measurements was performed on the thus obtained surface-treated metal sheet. The results are shown in Table 1B. The thickness of the tin layer of the thus obtained surface-treated metal sheet was 0.20 um. In addition, in Example 16, the peak of Ni was detected by X-ray diffraction (XRD) measurement, and thus the presence of a nickel layer was confirmed. However the thickness of the nickel layer was not measurable.

Further, the percentage of Ni (atomic %) and the percentage of Sn (atomic %) in the surface region on the side where the nickel-tin alloy layer 40 was formed were measured by scanning Auger electron spectroscopy (AES) according to the method described above. As a result, the percentage of Ni was 4 atomic % and the percentage of Sn was 96 atomic %. The results are shown in Table 2.

<Comparative Example 1>

A nickel sheet having a thickness of 100 pm was prepared. In Comparative Example 1, the prepared nickel sheet was used as it was, and each of the above-described measurements was performed. The results are shown in Table 1A.

<Comparative Example 2>

A surface-treated metal sheet was obtained as in Example 1 except that no nickel plating layer was formed, but only a tin plating layer was formed on the base material 20. Then, each of the above-described measurements was performed on the thus obtained surface-treated metal sheet. The results are shown in Table 1A.

<Comparative Example 3>

A thermal treatment by box annealing was performed as in Example 2 except that the thermal treatment temperature (temperature maintained) in the box annealing was changed to 800°C to obtain a surface-treated metal sheet. In the thermal treatment by box annealing, the heating period was 1 hour and the cooling period was 1 hour. Then, each of the above-described measurements was performed on the thus obtained surface-treated metal sheet. The results are shown in Table 1A.

<Comparative Example 4>

A surface-treated metal sheet was obtained as in Example 5 except that the time of nickel plating and the time of tin plating were changed such that the deposited amount of nickel and the deposited amount of tin came to those shown in Table 1. Then, each of the above-described measurements was performed on the thus obtained surface-treated metal sheet. The results are shown in Table 1A.

<Comparative Example 5>

In a manner similar to that in Example 1, a steel sheet having a nickel plating layer and a tin plating layer was obtained. Each of the above-described measurements was performed on the thus obtained steel sheet having a nickel plating layer and a tin plating layer without performing a room-temperature diffusion treatment or a thermal treatment (i.e., each of the above-described measurements was performed directly after the plating without performing a room-temperature diffusion treatment or a thermal treatment). The results are shown in Table 1B.

[Table 1A]

Table 1A

| | Production conditions | | | | Deposited amount on surface-treated metal sheet (XRF) | | Layer thickness (GDS) | | Composition and state of metals on surface-treated sheet (XRD) | Properties after anode reaction | | | |
|---|---|---|---|---|---|---|---|---|---|---|---|---|---|
| | Base material | Plating conditions | Conditions for treatment after plating | | | | | | | | | | |
| | | | Temperature [°C] | Time | Ni [g/m²] | Sn [g/m²] | Ni layer [μm] | NiSn alloy layer [μm] | | Sn dissolution rate[*1] [%] | Evaluation of electrolyte-resistant property (evaluation criteria 1) | Corrosion current density [mA/cm²] | Evaluation of suppression of gas generation |
| Example 1 | Steel sheet | Multilayer plating | 85 | 0.5 hours | 6.03 | 1.79 | 0.64 | 0.14 | Sn, Ni-Sn40-42, Ni-Sn46-48. Ni | 34 | ○ | 6 | ◎ |
| Example 2 | Steel sheet | Multilayer plating | 50 | 3 hours | 6.63 | 1.79 | 0.92 | 0.22 | Sn, Ni-Sn40-42, Ni-Sn46-48, Ni | 17 | ○ | 10 | ◎ |
| Example 3 | Steel sheet | Multilayer plating | 100 | 3 hours | 6.10 | 1.90 | 0.50 | 0.16 | Ni3Sn4, Ni | 10 | ◎ | 1 | ◎ |
| Example 4 | Steel sheet | Multilayer plating | 150 | 3 hours | 6.52 | 1.78 | 0.54 | 0.19 | Ni3Sn4, Ni | - | ◎ | 7 | ◎ |
| Example 5 | Steel sheet | Multilayer plating | 200 | 3 hours | 6.06 | 1.76 | 0.52 | 0.20 | Ni3Sn4, Ni | - | ◎ | 5 | ◎ |
| Example 6 | Steel sheet | Multilayer plating | 250 | 3 hours | 5.86 | 1.68 | 0.47 | 0.22 | Ni3Sn4, Ni | - | ◎ | 3 | ◎ |
| Example 7 | Steel sheet | Multilayer plating | 300 | 3 hours | 5.95 | 1.73 | 0.46 | 0.26 | Ni3Sn2, Ni | - | ◎ | 33 | ○ |
| Example 8 | Steel sheet | Multilayer plating | 400 | 3 hours | 620 | 1.75 | 0.37 | 0.38 | Ni3Sn2, Ni3Sn, Ni | - | ◎ | 27 | ○ |
| Example 9 | Steel sheet | Multilayer plating | 600 | 3 hours | 6.05 | 1,69 | 0.00 | 0.19 | Ni3Sn2, Fe3Ni | - | ◎ | 31 | ○ |

| | Base material | Plating conditions | Conditions for treatment after plating | | Deposited amount on surface-treated metal sheet (XRF) | | Layer thickness (GDS) | | Composition and state of metals on surface-treated sheet (XRD) | Properties after anode reaction | | | |
|---|---|---|---|---|---|---|---|---|---|---|---|---|---|
| | | | Temperature [°C] | Time | Ni [g/m²] | Sn [g/m²] | Ni layer [μm] | NiSn alloy layer [μm] | | Sn dissolution rate[*1] [%] | Evaluation of electrolyte-resistant property (evaluation criteria 1) | Corrosion current density [mA/cm²] | Evaluation of suppression of gas generation |
| Example 10 | Steel sheet | Multilayer plating | 200 | 3 hours | 3.98 | 1,86 | 0.28 | 0.24 | Ni3Sn4, Ni | - | ◎ | 13 | ◎ |
| Example 11 | Steel sheet | Multilayer plating | 200 | 3 hours | 6.80 | 0.78 | 0.57 | 0.10 | Ni3Sn4, Ni | 6 | ◎ | 4 | ◎ |
| Example 12 | Steel sheet | Multilayer plating | 200 | 3 hours | 17.57 | 7.62 | 1.10 | 0.81 | Ni3Sn4, Ni | - | ○ | 1 | ◎ |
| Example 13 | Perforated steel sheet | Multilayer plating | 200 | 3 hours | 550 | 1.71 | 0.28 | 0.20 | Ni3Sn4, Ni | - | ◎ | 1 | ◎ |
| Example 14 | Electrolytic Fe foil | Multilayer plating | 200 | 3 hours | 17.43 | 7.60 | 120 | 0.79 | Ni3Sn4, Ni | - | ◎ | 4 | ◎ |
| Example 15 | Electrolytic Ni foil | Monolayer plating | 200 | 3 hours | - | 7.55 | - | 0.78 | Ni3Sn4, Ni | - | ◎ | 9 | ◎ |
| Comparative Example 1 | Ni sheet | - | - | - | - | - | - | - | - | - | ◎ | 56 | × |
| Comparative Example 2 | Steel sheet | Monolayer plating | - | - | - | 5,69 | - | - | Sn | 83 | × | - | - |
| Comparative Example 3 | Steel sheet | Multilayer plating | 800 | 3 hours | 5.98 | 1.70 | - | - | Fe2.5Ni2.5Sn3, Fe3Ni | - | ◎ | 60 | × |

EP 4 398 349 A1

(continued)

| | Base material | Plating conditions | Production conditions | | Deposited amount on surface-treated metal sheet (XRF) | | Layer thickness (GDS) | | Composition and state of metals on surface-treated sheet (XRD) | Properties after anode reaction | | | |
|---|---|---|---|---|---|---|---|---|---|---|---|---|---|
| | | | Conditions for treatment after plating | | | | | | | | | | |
| | | | Temperature [°C] | Time | Ni [g/m$^2$] | Sn [g/m$^2$] | Ni layer [μm] | NiSn alloy layer [μm] | | Sn dissolution rate[*1] [%] | Evaluation of electrolyte-resistant property (evaluation criteria 1) | Corrosion current density [mA/cm$^2$] | Evaluation of suppression of gas generation |
| Comparative Example 4 | Steel sheet | Multilayer plating | 200 | 3 hours | 0.90 | 0.07 | 0.11 | 0.00 | Ni, Fe | 10 | ◎ | 94 | × |
| *1. "-" denotes an Sn dissolution rate of 5% or less. | | | | | | | | | | | | | |

[Table 1B]

[Table 1B]

Table 1B

| | Production conditions | | | | Deposited amount on surface-treated metal sheet (XRF) | | Layer thickness (GDS) | | Composition and state of metals on surface-treated sheet (XRD) | Properties after anode reaction | | | |
|---|---|---|---|---|---|---|---|---|---|---|---|---|---|
| | Base materia | Plating conditions | Conditions for treatment after plating | | | | | | | Sn [g/m²] | Evaluation of electrolyte-resistant property (evaluation criteria 2) | Corrosion current density [mA/cm²] | Evaluation of suppression of gas generation |
| | | | Temperature [°C] | Time | Ni [g/m²] | Sn [g/m²] | Ni layer [μm] | NiSn alloy layer [μm] | | | | | |
| Example 1 | Steel sheet | Multilayer plating | 85 | 0.5 hours | 6.03 | 1.79 | 0.64 | 0.14 | Sn. Ni-Sn40-42, Ni-Sn46-48. Ni | 1.19 | ○ | 6 | ◎ |
| Example 2 | Steel sheet | Multilayer plating | 50 | 3 hours | 6.63 | 1.79 | 0.92 | 0.22 | Sn. Ni-Sn40-42, Ni-Sn46-48, Ni | 1.48 | ○ | 10 | ◎ |
| Example 16 | Steel sheet | Multilayer plating | 35 | 720 hours | 3.87 | 1045 | Not measurable | 0.46 | Sn, Ni-Sn40-42, Ni-Sn46-48, Ni | 2.82 | ○ | 15 | ◎ |
| Comparative Example 5 | Steel sheet | Multilayer plating | - | - | 616 | 2.04 | - | - | Sn. Ni | 0.34 | × | - | - |

[Table 2]

Table 2

| | | Production conditions | | | Percentage in surface region before anode reaction (AES) | |
|---|---|---|---|---|---|---|
| | Base material | Plating conditions | Conditions for treatment after plating | | Ni [atomic %] | Sn [atomic %] |
| | | | Temperature [°C] | Time | | |
| Example 1 | Steel sheet | Multilayer plating | 85 | 0.5 hours | 18 | 82 |
| Example 5 | Steel sheet | Multilayer plating | 200 | 3 hours | 44 | 50 |
| Example 8 | Steel sheet | Multilayer plating | 400 | 3 hours | 58 | 42 |
| Example 16 | Steel sheet | Multilayer plating | 35 | 720 hours | 4 | 96 |

"Multilayer plating" in Tables 1A, 1B, and 2 means that nickel plating and tin plating were carried out on the base material in this order.

As shown in Tables 1A and 1B, the surface-treated metal sheets in which a nickel-tin alloy layer was formed on a metal sheet based on iron or nickel as a base material had an excellent electrolyte-resistant property, demonstrated a decreased corrosion current density, and effectively suppressed gas generation (Examples 1 to 16).

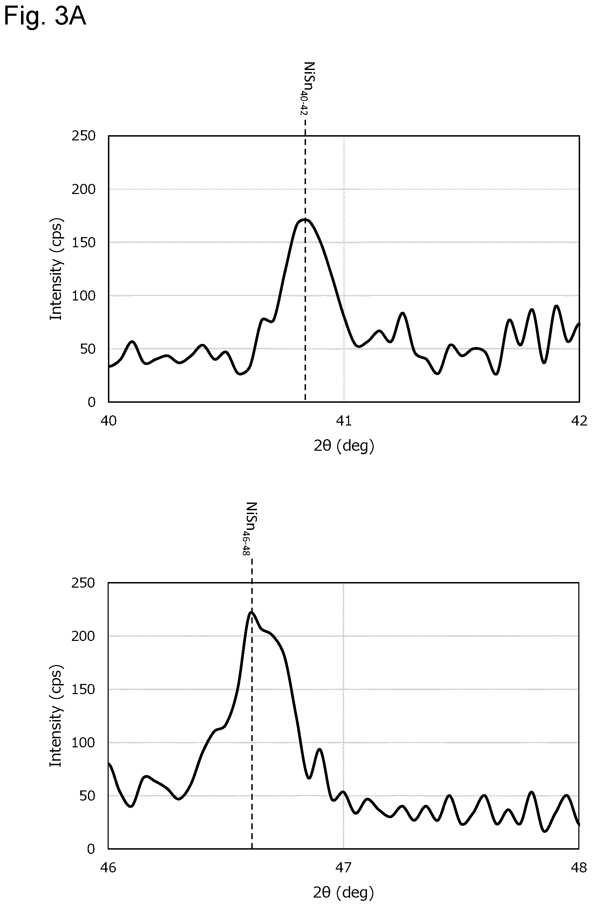

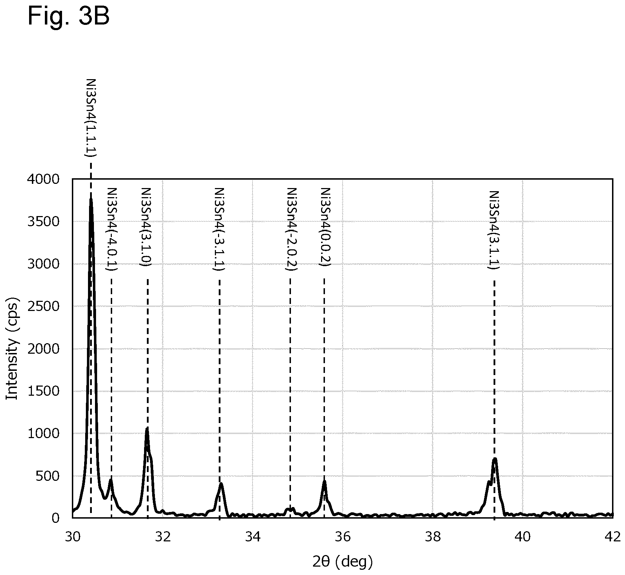

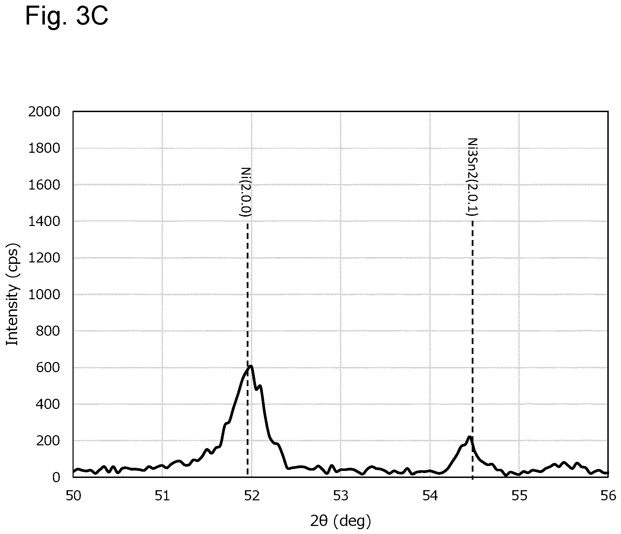

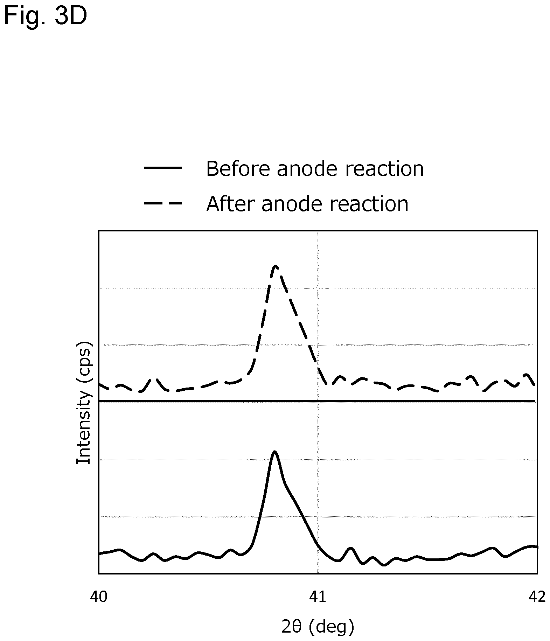

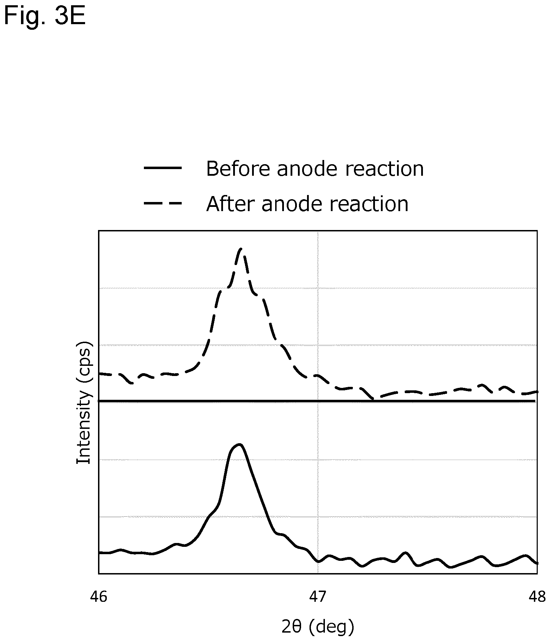

As a result of X-ray diffraction (XRD) measurement, both $Ni\text{-}Sn_{40\text{-}42}$ and $Ni\text{-}Sn_{46\text{-}48}$ were primarily contained as alloy phases constituting the nickel-tin alloy layer 40 in Examples 1, 2, and 16, $Ni_3Sn_4$ was primarily contained as an alloy phase constituting the nickel-tin alloy layer 40 in Examples 3 to 6 and 10 to 15, and $Ni_3Sn_2$ was primarily contained as an alloy phase constituting the nickel-tin alloy layer 40 in Examples 7 to 9. X-ray diffraction (XRD) charts of the alloy phases detected in Examples are shown in Figs. 3A to 3E. Fig. 3A is X-ray diffraction (XRD) charts that show two diffraction peaks of $Ni\text{-}Sn_{40\text{-}42}$ and $Ni\text{-}Sn_{46\text{-}48}$ (Example 1), Fig. 3B is an X-ray diffraction (XRD) chart that shows a diffraction peak of $Ni_3Sn_4$ (Example 5), and Fig. 3C is an X-ray diffraction (XRD) chart that shows a diffraction peak of $Ni_3Sn_2$ (Example 8). In addition, Figs. 3D and 3E are X-ray diffraction (XRD) charts that show two diffraction peaks of $Ni\text{-}Sn_{40\text{-}42}$ and those of $Ni\text{-}Sn_{46\text{-}48}$ before and after the above-described anode reaction test, respectively (Example 16).

In addition, as a result of X-ray diffraction (XRD) measurement, it was confirmed that the nickel-tin alloy layer 40 had a tin layer 50 as an overlaying layer of the nickel-tin alloy layer 40 and a nickel layer 30 as an underlying layer of the nickel-tin alloy layer 40 in Examples 1 and 2, the nickel-tin alloy layer 40 had a nickel layer 30 as an underlying layer of the nickel-tin alloy layer 40 in Examples 3 to 15 and the nickel-tin alloy layer 40 had a tin layer 50 as an overlaying layer of the nickel-tin alloy layer 40 in Example 16.

More specifically, it was confirmed that when, as alloy phases contained in the nickel-tin alloy layer 40 of each of Examples, both $Ni\text{-}Sn_{40\text{-}42}$ and $Ni\text{-}Sn_{46\text{-}48}$ were primarily contained as in Examples 1, 2, and 16, the effect of suppressing gas generation was superior. In addition, as shown in Figs. 3D and 3E, when two diffraction peaks of $Ni\text{-}Sn_{40\text{-}42}$ and $Ni\text{-}Sn_{46\text{-}48}$ before and after the above-described anode reaction test were analyzed, it was determined that even after the anode reaction test, two peaks of $Ni\text{-}Sn_{40\text{-}42}$ and $Ni\text{-}Sn_{46\text{-}48}$ were both present, and confirmed that there was a sufficient electrolyte-resistant property.

On the other hand, it was confirmed that when $Ni_3Sn_2$ was primarily contained as in Examples 7 to 9, the electrolyte-resistant property was superior. In addition, it was confirmed that when $Ni_3Sn_4$ was primarily contained as in Examples 3 to 6 and 10 to 15, both the electrolyte-resistant property and the gas generation-suppressing effect were superior.

More specifically, in Examples 1, 5, 8, and 16, the percentage of Ni (atomic %) and the percentage of Sn (atomic %) in the surface region on the side where the nickel-tin alloy layer 40 was formed were measured by scanning Auger electron spectroscopy (AES), and it was confirmed that the electrolyte-resistant property and the effect of suppressing gas generation were superior. In particular, in Example 5, it was determined that the percentages of Ni and Sn (atomic %) in the surface region on the side where the nickel-tin alloy layer 40 was formed were 44 atomic % and 56 atomic %, respectively, and it was confirmed that the electrolyte-resistant property and the gas generation-suppressing effect were far superior.

Further, in Comparative Example 3, as a result of X-ray diffraction (XRD) measurement, $Fe_{2.5}Ni_{2.5}Sn_3$ was detected as an alloy phase, and it was determined that an iron-nickel-tin ternary alloy layer was included. In addition, as a result of radio frequency glow discharge optical emission spectroscopic measurement (GDS), it was found that the Fe element contained in the base material 20 was defused up to the surface, and there was no nickel-tin alloy layer (binary alloy layer of nickel-tin), and thus the corrosion current density would be large and gas generation would be remarkable.

Figs. 5(A) to 5(C) show graphs produced by GDS measurement of the surface-treated metal sheets for batteries in Examples 1 and 5. Fig. 5(A) is a graph produced by GDS measurement of the surface-treated metal sheet for batteries of Example 1, Fig. 5(B) is a graph produced by GDS measurement of the surface-treated metal sheet for batteries of Example 5, and Fig. 5(C) is an enlarged graph showing the data of Fig. 5(B) in the early part of the measurement.

REFERENCE SIGNS LIST

    10, 10a surface-treated metal sheet for batteries
    20 base material
    30 nickel layer
    40 nickel-tin alloy layer
    50 tin layer

**Claims**

1.  A surface-treated metal sheet for batteries, the surface-treated metal sheet comprising:

    a base material which is a metal sheet based on iron or nickel; and
    a nickel-tin alloy layer on at least one side of the metal sheet.

2.  The surface-treated metal sheet for batteries according to claim 1, wherein the nickel-tin alloy layer has a thickness of 0.05 to 5.00 pm as measured by radio frequency glow discharge optical emission spectroscopy (GDS).

3.  The surface-treated metal sheet for batteries according to claim 1 or 2, comprising a nickel layer as an underlying layer of the nickel-tin alloy layer.

4.  The surface-treated metal sheet for batteries according to claim 1 or 2, wherein the deposited amount of nickel on the surface where the nickel-tin alloy layer is formed is 2.1 to 65.0 $g/m^2$.

5.  The surface-treated metal sheet for batteries according to claim 1 or 2, wherein the deposited amount of tin on the surface where the nickel-tin alloy layer is formed is 0.05 to 15.0 $g/m^2$.

6.  The surface-treated metal sheet for batteries according to claim 1 or 2, wherein the nickel-tin alloy layer contains $Ni_3Sn_4$ as an alloy phase.

7.  The surface-treated metal sheet for batteries according to claim 1 or 2, wherein the nickel-tin alloy layer contains, as an alloy phase, a nickel-tin alloy that gives a diffraction peak in at least one of the region of diffraction angle $2\theta$ = 40 to 42° or the region of diffraction angle $2\theta$ = 46 to 48° as measured by X-ray diffraction measurement using CuKa as an X-ray source.

8.  The surface-treated metal sheet for batteries according to claim 7, wherein the nickel-tin alloy layer contains, as alloy phases, nickel-tin alloys that give diffraction peaks in the region of diffraction angle 20 = 40 to 42° and the region of diffraction angle 20 = 46 to 48°.

9.  The surface-treated metal sheet for batteries according to claim 1 or 2, wherein the nickel-tin alloy layer contains, as an alloy phase, $Ni_3Sn_2$.

10. The surface-treated metal sheet for batteries according to claim 1 or 2, wherein the metal sheet is formed of low carbon steel or ultra-low carbon steel.

11. The surface-treated metal sheet for batteries according to claim 1 or 2, wherein the metal sheet is an electrolytic foil formed of pure iron, an electrolytic foil formed of pure nickel, or an electrolytic foil formed of a binary alloy of iron and nickel.

Fig. 1

Fig. 2

## Fig. 3A

Fig. 3B

Fig. 3C

Fig. 3D

Fig. 3E

Fig. 4

(A)

(B)

Fig. 5

(A)

(B)

(C)

## INTERNATIONAL SEARCH REPORT

International application No.

**PCT/JP2022/033006**

### A. CLASSIFICATION OF SUBJECT MATTER

*H01M 4/66*(2006.01)i; *C23C 28/02*(2006.01)i; *C25D 5/12*(2006.01)i; *C25D 5/26*(2006.01)i; *C25D 5/50*(2006.01)i;
*C25D 7/00*(2006.01)i; *C25D 7/06*(2006.01)i; *H01M 50/119*(2021.01)i; *H01M 50/534*(2021.01)i
FI:  H01M4/66 A; H01M50/119; H01M50/534; C25D7/00 G; C23C28/02; C25D5/12; C25D5/26 L; C25D5/50; C25D7/06

According to International Patent Classification (IPC) or to both national classification and IPC

### B. FIELDS SEARCHED

Minimum documentation searched (classification system followed by classification symbols)

H01M4/66; C23C28/02; C25D5/12; C25D5/26; C25D5/50; C25D7/00; C25D7/06; H01M50/119; H01M50/534

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2000-48799 A (MATSUSHITA ELECTRIC IND. CO., LTD.) 18 February 2000 (2000-02-18) claims, paragraphs [0012], [0013], fig. 3 | 1, 3 |
| A | | 2, 4-11 |
| X | JP 2006-351432 A (TOYO KOHAN CO., LTD.) 28 December 2006 (2006-12-28) claims, paragraphs [0016], [0026] | 1, 3, 10 |
| A | | 2, 4-9, 11 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **11 October 2022** | **01 November 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

## INTERNATIONAL SEARCH REPORT
**Information on patent family members**

International application No.

**PCT/JP2022/033006**

| Patent document cited in search report | | | Publication date (day/month/year) | Patent family member(s) | Publication date (day/month/year) |
|---|---|---|---|---|---|
| JP | 2000-48799 | A | 18 February 2000 | (Family: none) | |
| JP | 2006-351432 | A | 28 December 2006 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H275160 A